(19) Europäisches Patentamt / European Patent Office / Office européen des brevets

(11) **EP 3 874 482 B1**

(12) **FASCICULE DE BREVET EUROPEEN**

(45) Date de publication et mention de la délivrance du brevet:
**09.10.2024 Bulletin 2024/41**

(21) Numéro de dépôt: **19813085.8**

(22) Date de dépôt: **22.10.2019**

(51) Classification Internationale des Brevets (IPC):
**G08B 17/00** *(2006.01)*    **G08B 17/12** *(2006.01)*
**A62C 3/02** *(2006.01)*    **H04N 13/239** *(2018.01)*

(52) Classification Coopérative des Brevets (CPC):
**H04N 13/239; A62C 3/0271; G08B 17/005;
G08B 17/125; H04N 2013/0081**

(86) Numéro de dépôt international:
**PCT/FR2019/052508**

(87) Numéro de publication internationale:
**WO 2020/089541 (07.05.2020 Gazette 2020/19)**

(54) **DISPOSITIF DE CARACTÉRISATION D'UN INCENDIE ET PROCÉDÉ ASSOCIÉ DE DÉTERMINATION DE FLUX RADIATIFS**

VORRICHTUNG ZUR CHARAKTERISIERUNG EINES FEUERS UND ZUGEHÖRIGES VERFAHREN ZUR BESTIMMUNG VON STRAHLUNGSFLÜSSEN

DEVICE FOR CHARACTERIZING A FIRE AND ASSOCIATED METHOD FOR DETERMINING RADIANT FLUXES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2018 FR 1860119**

(43) Date de publication de la demande:
**08.09.2021 Bulletin 2021/36**

(73) Titulaires:
- **Université de Corse P. Paoli
  20250 Corte (FR)**
- **Centre national de la recherche scientifique
  75016 Paris (FR)**

(72) Inventeurs:
- **ROSSI TISON, Lucile
  20167 AFA (FR)**
- **MORANDINI, Frédéric
  20250 CORTE (FR)**
- **TOULOUSE, Tom
  20250 CORTE (FR)**
- **SILVANI, Xavier
  20090 AJACCIO (FR)**

(74) Mandataire: **INNOV-GROUP
310, avenue Berthelot
69372 Lyon Cedex 08 (FR)**

(56) Documents cités:
**US-A- 5 218 345**

- **JEAN-LOUIS ROSSI ET AL: "Simplified Flame Models and Prediction of the Thermal Radiation Emitted by a Flame Front in an Outdoor Fire", COMBUSTION SCIENCE AND TECHNOLOGY., vol. 182, no. 10, 22 September 2010 (2010-09-22), US, pages 1457 - 1477, XP055600998, ISSN: 0010-2202, DOI: 10.1080/00102202.2010.489914**
- **ROSSI L ET AL: "Estimating the surface and volume of laboratory-scale wildfire fuel using computer vision", IET IMAGE PROCES, IET, UK, vol. 6, no. 8, 9 November 2012 (2012-11-09), pages 1031 - 1040, XP006043599, ISSN: 1751-9659, DOI: 10.1049/IET-IPR.2012.0056**
- **ZARATE L ET AL: "Establishing safety distances for wildland fires", FIRE SAFETY JOURNAL, ELSEVIER, AMSTERDAM, NL, vol. 43, no. 8, 1 November 2008 (2008-11-01), pages 565 - 575, XP025469141, ISSN: 0379-7112, [retrieved on 20080305], DOI: 10.1016/J.FIRESAF.2008.01.001**

EP 3 874 482 B1

- ROSSI L ET AL: "Image processing and vision for the study and the modeling of spreading fires", IMAGE PROCESSING THEORY, TOOLS AND APPLICATIONS (IPTA), 2012 3RD INTERNATIONAL CONFERENCE ON, IEEE, 15 October 2012 (2012-10-15), pages 47 - 52, XP032336923, ISBN: 978-1-4673-2585-1, DOI: 10.1109/IPTA.2012.6469512
- ROSSI J L ET AL: "An analytical model based on radiative heating for the determination of safety distances for wildland fires", FIRE SAFETY JOURNAL, ELSEVIER, AMSTERDAM, NL, vol. 46, no. 8, 20 July 2011 (2011-07-20), pages 520 - 527, XP028310645, ISSN: 0379-7112, [retrieved on 20110803], DOI: 10.1016/J.FIRESAF.2011.07.007

**Description**

La présente invention concerne le domaine de la caractérisation d'un incendie. Plus particulièrement, la présente invention se rapporte à la détermination à partir de moyens optiques de flux de chaleur rayonné d'un incendie.

Les incendies, comme les feux de forêt ou les feux industriels par exemple, représentent un risque majeur pour de nombreuses régions dans le monde comme par exemple le bassin Méditerranéen (Corse, sud de la France, Espagne, Italie, Grèce...), l'Australie, le sud-ouest des Etats-Unis (Californie, Arizona...). Ils sont aussi un risque pérenne des installations classées pour la protection de l'environnement dans les îles où le recours aux systèmes énergétiques thermiques de production d'électricité impose le stockage de combustibles hydrocarbures liquides et gazeux. Dans tous les cas, les incendies causent des dégâts environnementaux (déforestation, désertification, pollution de l'air par émissions de gaz à effet de serre et de particules fines, recirculation des métaux lourds et radionucléides) ainsi que des pertes humaines et financières (destruction de logements et autres bâtiments, destruction de matériel de lutte).

Pour les feux de forêt, plus de 350 millions d'hectares de végétation sont détruits chaque année sur notre planète. De plus, ces feux sont sources de dépenses importantes aussi bien en matériel qu'en hommes, ou encore qu'en coûts de lutte associés. Par exemple en 2018 en Californie aux Etats-Unis, des incendies ont brûlé environ 120000 hectares de végétation et 7000 logements faisant plusieurs dizaines de morts et de blessés et mobilisant environ 30000 pompiers. Les incendies de l'été 2018 en Californie présentent un coût global supérieur à 2 milliards de dollars US. Par ailleurs, du fait du réchauffement climatique, la fréquence des incendies risque d'augmenter ainsi que les coûts de lutte et les dégâts si des moyens de lutte efficaces ne sont pas mis en place.

Pour limiter l'impact de ce risque majeur, des actions de prévention et de lutte sont réalisées. L'efficacité de ces deux types d'action est liée à la connaissance des phénomènes qui interviennent lors de la propagation des feux.

Ainsi, de nombreux travaux ont été menés afin de déterminer les phénomènes intervenant lors de la propagation des feux. De nombreux travaux ont été menés pour déterminer des instruments de mesure basés sur la vision par ordinateur afin de pouvoir déterminer certaines caractéristiques géométriques du feu décrivant l'évolution d'un incendie. On peut par exemple citer la thèse du Docteur Tom Toulouse intitulée « Estimation par stéréovision multimodale de caractéristiques géométriques d'un feu de végétation en propagation », soutenue le 13 novembre 2015, ou encore les documents suivants :

- « Image processing and vision for the study and the modeling of spreading fires », L. Rossi & al., Image Processing Theory, Tools and Applications, 2012 ;
- « Estimation of spreading fire geometrical characteristics using near infrared stéréovision », L. Rossi & al., Electronic Imaging 2013, San Francisco, Etats-Unis ;
- « Utilisation de la stéréovision visible et proche infrarouge pour la mesure de données expérimentales dans le cadre d'une recherche pluridisciplinaire sur les feux de forêt », L. Rossi & al.,
- « Computer vision techniques for forest fire perception », Martinez-de-Dios & al., Image and vision computing, 26, 2008, pp. 550-562.

US 5 218 345 A (MULLER KURT A [CH] ET AL) 8 juin 1993 (1993-06-08)

Cependant, ces différents articles divulguent uniquement des outils informatiques et de vision permettant de déterminer les caractéristiques géométriques de feux sans permettre l'estimation de l'impact thermique et donc du risque dans des zones adjacentes au feu. Plus particulièrement, les dispositifs de vision actuels ne permettent pas d'estimer un flux radiatif dans une zone prédéterminée adjacente au feu. La détermination des flux radiatifs dans cette région peut permettre par exemple de piloter les personnels de lutte contre cet incendie ou encore le déplacement du matériel déployés sur le terrain, et également adapter la quantité d'eau à envoyer sur le feu, ou encore déterminer les zones de feu qui méritent un traitement urgent pour limiter la propagation de cet incendie. De telles mesures sont actuellement possibles, mais leur mise en oeuvre est difficile car elles nécessitent l'utilisation de capteurs intrusifs au feu, plus particulièrement il est nécessaire de positionner le capteur de flux à l'endroit où on souhaite mesurer ce flux, ce qui peut exposer les opérationnels et matériels à un danger certain.

D'autre part, on connaît de l'article « Comparison of the measurement results of large scale façade fire tests using IR thermography and thermocouples », Milovanovic & Pecur, Proceedings of the international conférence in Dubrovnik, 2015, un dispositif comprenant une caméra infra-rouge permettant de déterminer la température d'un mur en feu. Cependant, ce document est silencieux quant à une détermination éventuelle d'un flux radiatif émis par ce feu afin de pouvoir par exemple piloter les troupes d'intervention sur le terrain.

Ensuite, on connaît de l'article « Simplified flame models and prédiction of the thermal radiation emitted by a flame front in an outdoor fire », J.L. Rossi & al., Combustion Science Technology, Taylor & Francis, 2010, 182, pp. 1457-1477, un procédé pour le calcul d'un flux radiatif émis par un feu. Les différentes relations utilisées pour le calcul du flux radiatif sont assez complexes et donc difficiles à mettre en oeuvre sur le terrain. Par ailleurs, ces relations nécessitent une puissance de calcul importante et peuvent entraîner des temps de réponse longs.

L'article "Estimating the surface and volume of laboratory scale wildfire fuel using computer vision" de L ROSSI et al. traite par exemple de la détermination fine et en direct de feux au moyen de vision par ordinateur, mais ne mentionne pas de calcul de flux thermique.

L'article "Establishing safety distances for wildland fires" de L ZARATE et al. traite du calcul du flux thermique autour d'un feu, mais repose sur la modélisation du feu de façon simplifiée et approximative, sous forme de surface plane verticale et rectangulaire, ce qui entraîne des écarts importants, notamment aux distances inférieures à quelques dizaine de mètres du feu considéré. L'utilisation de cette méthode pour répartir par exemple des pompiers autour de l'incendie est donc potentiellement dangereuse, ou ne permettra pas en tout cas de répartir les pompiers au plus près dudit feu pour mieux le combattre.

Le document US 5 218 345 A divulgue la détection de feu par caméra infrarouge.

L'article "Image processing and vision for the study and the modeling of spreading fires" divulgue la combinaison de caméras dans le domaine du visible et des caméras dans le domaine de l'infrarouge pour la détection d'incendies.

La présente invention a pour objectif de pallier au moins partiellement aux inconvénients de l'art antérieur exposés ci-dessus en proposant un dispositif et un procédé de caractérisation d'un incendie tels que définis dans les revendications annexées.

D'autres caractéristiques et avantages de la présente invention apparaîtront plus clairement à la lecture de la description suivante et des dessins annexés dans lesquels :

- la figure 1 est une représentation schématique d'un dispositif de caractérisation d'un incendie,
- la figure 2 est une représentation schématique en perspective d'un système de stéréovision de la figure 1,
- la figure 3 est une représentation schématique en perspective d'un système de stéréovision embarqué sur un véhicule automobile,
- la figure 4 est une représentation schématique d'un dispositif permettant de déterminer des valeurs de calibrage pour le dispositif de caractérisation d'un incendie de la figure 1,
- la figure 5A est une représentation schématique d'une courbe illustrant un flux radiatif en fonction d'une surface de feu,
- la figure 5B est une représentation schématique d'une courbe illustrant un flux radiatif en fonction d'un volume de feu,
- la figure 6 est une représentation schématique d'une courbe représentant l'évolution moyenne d'un flux radiatif et d'un volume de feu au cours du temps,
- la figure 7 est une représentation schématique de la corrélation entre les fluctuations autour de la valeur moyenne des différents paramètres d'un feu avec celles de différents capteurs de flux radiatif disposés à plusieurs endroits devant un front de flamme,

- la figure 8A est une représentation schématique de dessus d'un feu présentant deux dispositifs de stéréovision selon un premier mode de réalisation particulier,
- la figure 8B est une représentation schématique de dessus d'un feu présentant deux dispositifs de stéréovision selon un deuxième mode de réalisation particulier,
- la figure 9A est une représentation schématique de points de feu extraits des images prises par les dispositifs de stéréovision des figures 8A ou 8B,
- la figure 9B est une représentation schématique en perspective d'un modèle de feu issu de la combinaison des images prises par les dispositifs de stéréovision des figures 8A ou 8B, et
- la figure 10 est une représentation schématique d'un organigramme illustrant différentes étapes d'un procédé de détermination de flux radiatifs.

Les éléments identiques sur les différentes figures portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent uniquement à un seul mode de réalisation. De simples caractéristiques de différents modes de réalisation peuvent également être combinées et/ou interchangées pour fournir d'autres réalisations.

Dans la description suivante, on peut indexer certains éléments ou paramètres, comme par exemple premier élément ou deuxième élément ainsi que premier paramètre et deuxième paramètre, ou encore premier critère et deuxième critère, etc. Dans ce cas, il s'agit d'un simple indexage pour différencier et dénommer des éléments proches mais non identiques et on peut aisément interchanger de telles dénominations sans sortir du cadre de la présente description. Cette indexation n'implique pas non plus un ordre dans le temps par apprécier tel ou tel critère.

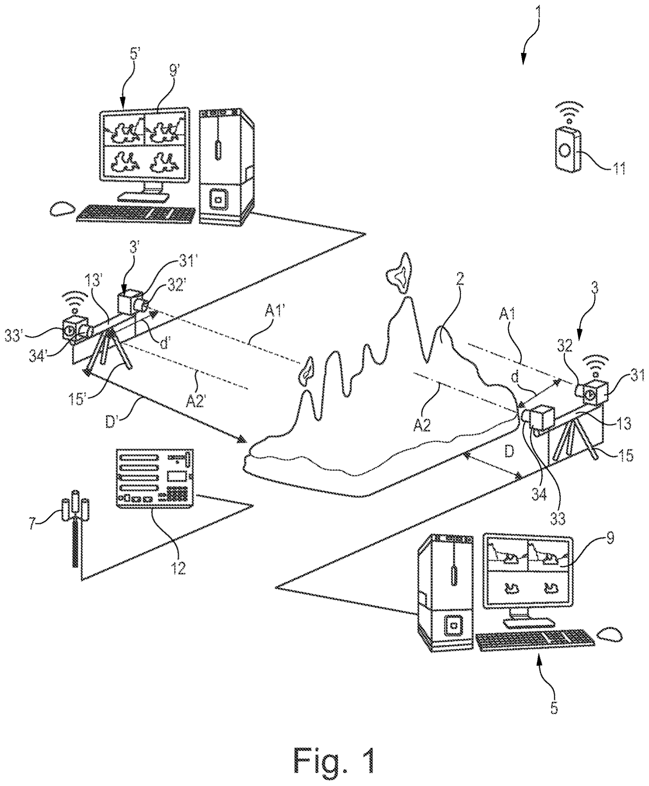

En référence à la figure 1, il est représenté un dispositif de caractérisation d'un incendie 1. Le dispositif de caractérisation d'un incendie 1 comprend au moins un système de stéréovision 3 et au moins une unité de traitement 5.

Le système de stéréovision 3 comporte une première 31 et une deuxième 33 unités de prise de vue configurées pour prendre des images d'un incendie 2. Les première 31 et deuxième 33 unités de prise de vue peuvent être placées à une hauteur prédéterminée du sol, comme par exemple à une hauteur comprise entre 1 mètre et 3 mètres. Par ailleurs, les première 31 et deuxième 33 unités de prise de vue présentent chacune un axe optique A1, A2. Les premier A1 et deuxième A2 axes optiques sont séparés l'un de l'autre par une distance d

prédéterminée au niveau des première 31 et deuxième 33 unités de prise de vue. Plus particulièrement, les première 31 et deuxième 33 unités de prise de vue présentent chacune une optique 32, 34 et la distance d prédéterminée est mesurée au niveau de ces première 32 et deuxième 34 optiques. La distance d prédéterminée entre les premier A1 et deuxième A2 axes optiques des première 31 et deuxième 33 unités de prise de vue du système de stéréovision 3 peut être choisie en fonction d'une distance D entre le système de stéréovision 3 et l'incendie 2. Par exemple, cette distance d prédéterminée entre les premier A1 et deuxième A2 axes optiques peut être de 1 m lorsque la distance D séparant le système de stéréovision 3 de l'incendie 2 est de 12 m environ. Par ailleurs, les premier A1 et deuxième A2 axes optiques du système de stéréovision 3 sont notamment disposés parallèlement l'un par rapport à l'autre.

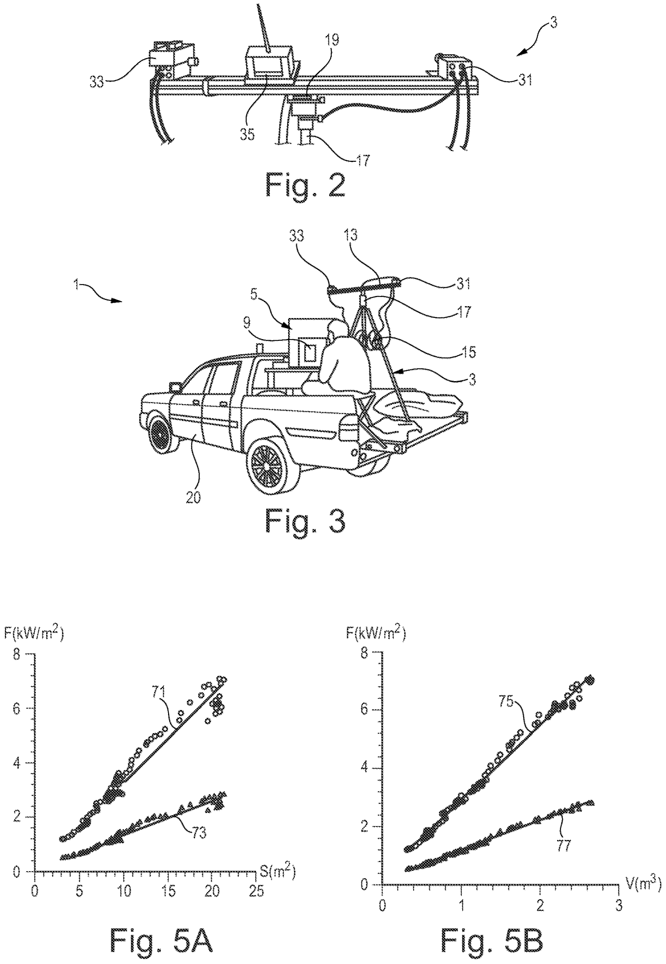

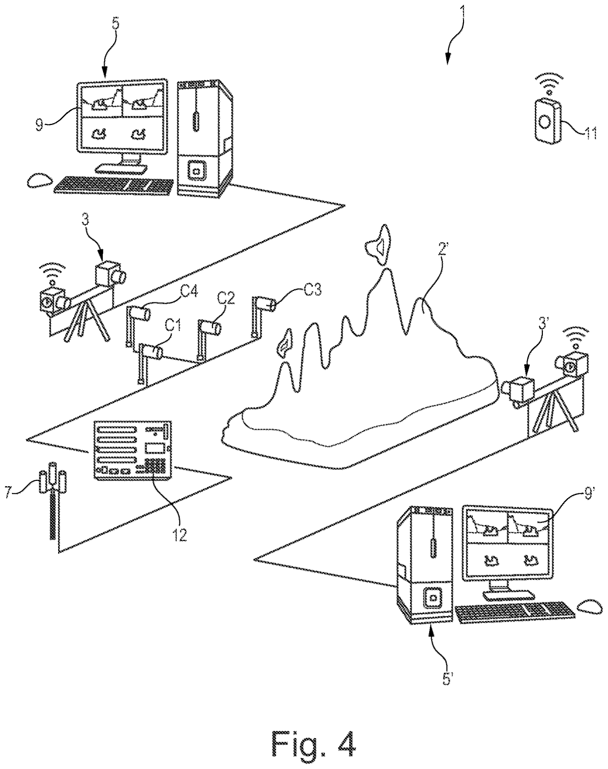

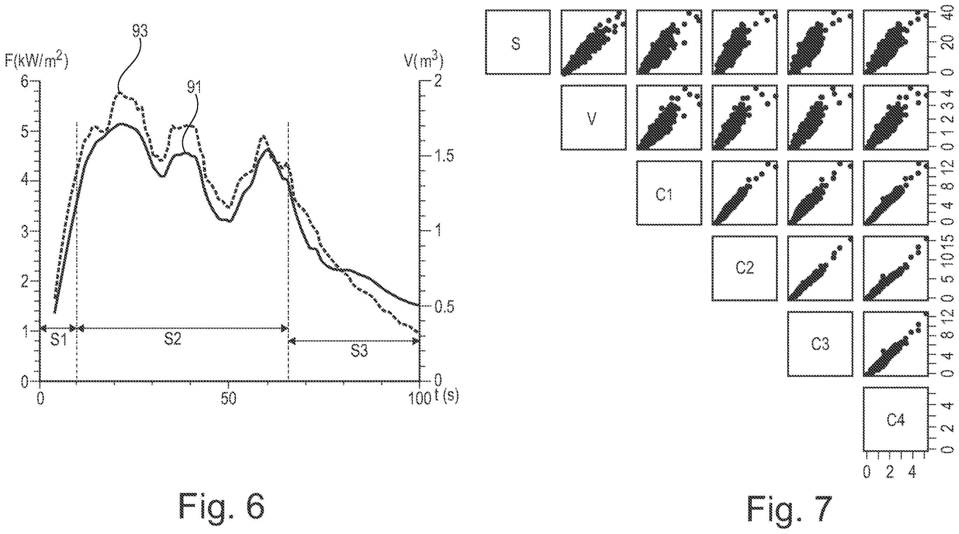

De plus, l'unité de traitement 5 est configurée pour combiner les images prises par les première 31 et deuxième 33 unités de prise de vue de l'au moins un système de stéréovison 3 afin de déterminer au moins une caractéristique géométrique du feu. Cette au moins une caractéristique géométrique du feu peut être choisie parmi la surface de feu S, ou le volume de feu V (visibles notamment sur la figure 7), une surface frontale du feu par rapport à une cible, l'aire du front de feu par rapport à une cible, ou encore un facteur de forme de ce feu. La surface de feu S, la surface du front de feu par rapport à une cible, ou encore l'aire du front de feu par rapport à une cible correspondent à une caractéristique géométrique bidimensionnelle du feu au sens de la présente description. Cette caractéristique géométrique bidimensionnelle du feu est représentée par une courbe tridimensionnelle. Le volume de feu V, quant à lui, correspond à une caractéristique géométrique tridimensionnelle du feu au sens de la présente description. L'unité de traitement 5 peut notamment être configurée pour réaliser une triangulation, comme par exemple une triangulation de Delaunay, afin d'obtenir une surface fermée à partir de laquelle la surface S ou le volume V de feu peuvent être calculés. D'autre part, l'unité de traitement 5 est configurée pour déterminer un flux radiatif F (représenté en référence aux figures 5A à 6 par exemple) de cet incendie 2 à partir d'une relation linéaire calibrée établie entre un flux radiatif d'un feu de référence en fonction d'au moins une des caractéristiques géométriques du feu et d'au moins une catégorie de feu choisie parmi plusieurs catégories prédéterminées de feu, comme cela est décrit plus en détail ultérieurement, afin de pouvoir déterminer des zones exposées à un flux radiatif F émis par l'incendie 2 dépassant un seuil de référence. Selon la présente description, on entend par flux radiatif F, une énergie par unité de temps, notamment calorifique, reçue par unité de surface, exprimée en kW/m$^2$ chaque seconde. Par ailleurs, on entend par catégorie de feu au sens de la présente description, le type de combustible alimentant cet incendie 2. De manière non exhaustive, ces catégories de feu peuvent comprendre les feux de forêts, les feux de liquides, ou encore les feux industriels. Par ailleurs, ces catégories de feu peuvent comprendre un matériau combustible particulier, comme par exemple du bois ou un type de bois spécifique comme du sapin ou du chêne, de la végétation sèche ou humide comme par exemple de la paille, du maquis, ou encore de la garrigue pour les feux de forêts, la famille chimique du combustible pour les feux de liquides, comme par exemple les alcools, les aldéhydes, les cétones, les éthers, les hydrocarbures, ou encore les huiles et éventuellement des composés particuliers dans ces familles chimiques comme par exemple de l'éthanol, du propanol, de l'éther diéthylique, de l'acétone, ou encore de l'essence, dans le cadre des feux industriels on peut par exemple trouver comme catégorie prédéterminée des feux d'origine métallique (dont le matériau combustible peut par exemple être du sodium métallique, ou encore du phosphore blanc), des feux dont le matériau combustible est un plastique ou un type de plastique particulier, ou encore dont le matériau combustible est du caoutchouc. En effet, selon la catégorie de feu considérée, les coefficients de calibration de la relation linéaire peuvent être modifiés et donc les flux radiatifs F déterminés également. D'autre part, on entend par relation linéaire dans la description suivante, une relation de proportionnalité entre le flux radiatif F et au moins une caractéristique géométrique du feu. De plus, cette relation linéaire est calibrée car elle est basée sur des flux radiatifs issus de caractéristiques géométriques préalablement déterminées à l'aide de capteurs de flux C1-C4 (représentés en référence à la figure 4) comme cela est expliqué plus en détail ultérieurement.

Ainsi, ce dispositif de caractérisation d'un incendie 1 permet de déterminer simplement et rapidement des flux radiatifs F environnant l'incendie 2 afin de pouvoir par exemple déplacer des unités de lutte au sol, comprenant des hommes et du matériel de lutte comme par exemple des véhicules, afin de lutter plus efficacement contre cet incendie 2 et de prévenir leur exposition à un flux radiatif dépassant un seuil prédéterminé pouvant menacer leur intégrité. De plus, la mesure optique réalisée à partir des images de stéréovision prises par les première 31 et deuxième 33 unités de prise de vue permettent d'obtenir des images thermiques de l'incendie 2. Par ailleurs, ce dispositif de caractérisation d'un incendie 1 permet de combiner la vision de cet incendie 2 afin de déterminer au moins une caractéristique géométrique de ce feu et une mesure physique, à savoir le flux radiatif, sans avoir à utiliser de capteurs intrusifs qui ne peuvent que très difficilement être utilisés en conditions opérationnelles. Ce dispositif de caractérisation d'un incendie 1 permet donc d'étendre la vision des première 31 et deuxième 33 unités de prise de vue au-delà du motif initial et de permettre la réalisation d'au moins une mesure physique sans utiliser de capteur intrusif. Ainsi, ce système de stéréovision 3 permet d'estimer le flux radiatif F à un endroit à risque tout en conservant les opérationnels et les matériels à l'abri du danger. La combinaison des géométries du feu ainsi que la détermination des flux radiatifs F associés permettent d'aider à la détermination des scenarii de gestion de l'incendie 2 afin de limiter son impact. Par exemple, il est possible de réduire l'impact de cet incendie 2 en ciblant l'eau projetée sur cet incendie 2 au niveau d'un point critique du feu identifié par le système de stéréovision 3. D'autre part, il est également possible de réduire les quantités d'eau nécessaires pour lutter contre cet incendie 2 en ciblant ce point critique du feu par exemple. En effet, l'utilisation d'une relation linéaire entre le flux radiatif F et une caractéristique géométrique du feu et au moins une catégorie de feu ne nécessite pas de puissance de calcul élevée, ce qui permet d'avoir un temps de réponse rapide. Par ailleurs, un tel dispositif de caractérisation d'un incendie 1 peut être utilisé aussi bien pour déterminer des flux radiatifs F d'un incendie 2 fixe, comme par exemple d'un feu industriel, ou se propageant, comme par exemple d'un feu de forêt. L'au moins une unité de traitement 5 peut être configurée pour cartographier les caractéristiques géométriques du feu et les flux radiatifs F de différentes zones exposées à un flux radiatif F émis par l'incendie 2. De plus, l'unité de traitement 5 peut être configurée pour suivre au moins une caractéristique géométrique du feu en fonction du temps de manière à déterminer l'évolution temporelle de l'incendie 2 et de suivre les flux radiatifs F des différentes zones exposée à un flux radiatif émis par l'incendie 2 en fonction de cette évolution temporelle de l'incendie 2.

Par ailleurs, le dispositif de caractérisation d'un incendie 1 présente une unité d'affichage 9 en communication avec l'unité de traitement 5. Cette unité d'affichage 9 peut être fixe et reliée de manière physique, à l'aide d'un câble par exemple, à l'unité de traitement 5, comme par exemple un écran, ou elle peut être mobile et en communication avec l'unité de traitement 5 via une liaison sans fil par exemple. Lorsque l'unité d'affichage 9 est mobile, elle peut par exemple être une tablette, un smartphone, ou encore un écran intégré aux casques des unités de lutte, afin de pouvoir informer les unités de lutte en temps réel des flux radiatifs F émis par l'incendie 2 dans la zone où ils se trouvent afin de permettre leur déplacement et en particulier leur évacuation ainsi que celle du matériel dans l'éventualité où le flux radiatif F dépasse un seuil de référence. Plus particulièrement, l'unité d'affichage 9 est configurée pour afficher la cartographie réalisée par l'unité de traitement 5. Cette cartographie peut notamment présenter les zones exposées à un flux radiatif supérieur à une valeur donnée ou encore le (ou les) point(s) critique(s) du feu à arroser afin de circonscrire cet incendie 2. Afin de réaliser cette cartographie, il est nécessaire de réaliser plusieurs points de vue de cet incendie 2. Plus particulièrement, il est conseillé de prendre des images en face du front de feu et d'un côté de ce feu. Toutefois, d'autres positionnement des images peuvent être envisagés en fonction de l'étalonnage du dispositif de caractérisation d'un incendie 1.

D'autre part, le dispositif de caractérisation d'un incendie 1 peut comporter en outre un contrôleur 11 configuré pour piloter le déclenchement des enregistrements des première 31 et deuxième 33 unités de prise de vue de l'au moins un système de stéréovision 3 de manière simultanée. Ce contrôleur 11 peut par exemple être un contrôleur radio, ou encore un contrôleur utilisant d'autres bandes fréquences afin de permettre le déclenchement des enregistrements des première 31 et deuxième 33 unités de prise de vue comme par exemple les bandes Wifi®, Bluetooth®, ou encore les bandes ISM (correspondant à l'acronyme d'Industriel Scientifique et Médical). Le déclenchement en simultané des prises de vue du système de stéréovision 3 permet de limiter les erreurs sur la définition des caractéristiques géométriques du feu. En effet, ces caractéristiques géométriques sont déterminées par la combinaison des images prises par les première 31 et deuxième 33 unités de prise de vue, leur synchronisation permet donc de s'affranchir des besoins d'intégrer un retard dans les images prises par une des unités de prise de vue lors de la détermination des caractéristiques géométriques du feu.

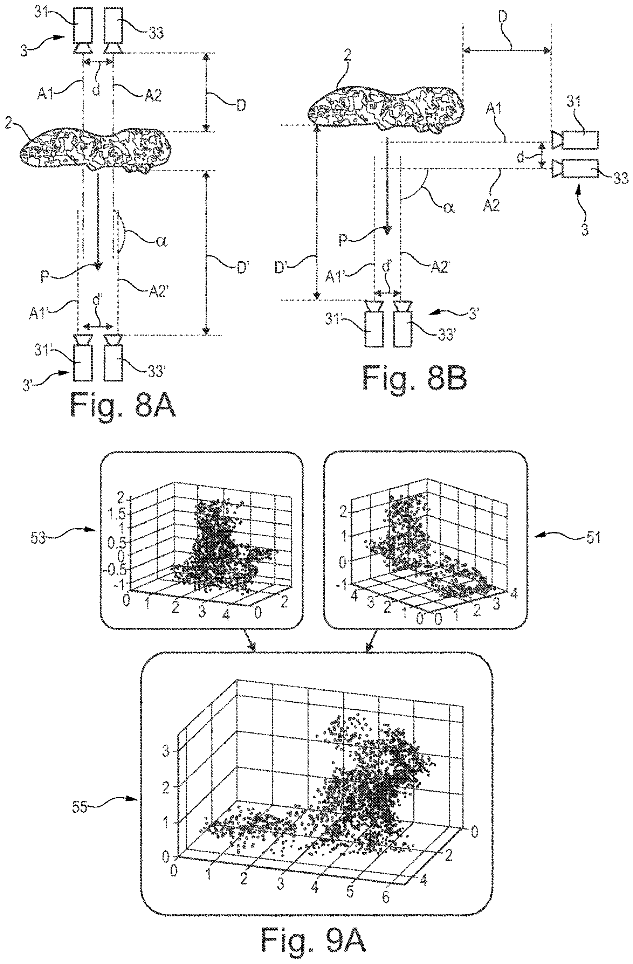

Selon le mode de réalisation particulier de la figure 1, le dispositif de caractérisation d'un incendie 1 présente deux systèmes de stéréovision 3, 3' reliés respectivement à une unité de traitement 5, 5', se présentant par exemple sous la forme d'un ordinateur. Selon ce mode de réalisation particulier, chaque unité de traitement 5, 5' présente une unité d'affichage 9, 9'. De manière alternative non représentée ici, un tel dispositif de caractérisation d'un incendie 1 peut comprendre une seule unité de traitement 5 recevant les images prises par chacun des systèmes de stéréovision 3, 3' et une seule unité d'affichage 9 par exemple. Afin de pouvoir déterminer les caractéristiques géométriques du feu en temps réel, le dispositif de caractérisation d'un incendie 1 peut présenter un système émetteur/récepteur (non représenté) configuré pour transférer les points de feu tridimensionnels déterminés par les systèmes de sétérovision 3, 3' de manière à recaler les différents points de feu issus des images prises par les systèmes de stéréovision 3, 3' (comme représenté en référence à la figure 9A) et déterminer l'ensemble des caractéristiques géométriques du feu.

De plus, les premier A1 et deuxième A2 axes optique d'un des systèmes de stéréovision 3 sont espacés l'un de l'autre d'une distance d et les premier A1' et deuxième A2' axes optiques de l'autre système de stéréovision 3' sont espacés l'un de l'autre d'une distance d'. Ces distances d et d' peuvent être identiques ou différentes selon la distance D, D' séparant le système de stéréovision 3, 3' de l'incendie 2.

D'autre part, selon ce mode de réalisation particulier, le dispositif de caractérisation d'un incendie 1 peut comporter en outre un anémomètre 7 configuré pour déterminer des caractéristiques du vent telles que la vitesse ou encore la direction du vent. L'anémomètre 7 est relié à l'unité de traitement 5, 5' afin de lui transmettre les caractéristiques du vent mesurées. De plus, l'unité de traitement 5, 5' peut être configurée pour corriger le flux radiatif F de l'incendie 2 en fonction des caractéristiques du vent mesurées par l'anémomètre 7. En effet, le vent peut influer sur le flux radiatif F de l'incendie 2 et la présence de cet anémomètre 7 peut permettre de modifier la cartographie réalisée par l'unité de traitement 5 de manière à prendre en considération les effets du vent sur les flux radiatifs F déterminés.

Par ailleurs, selon ce mode de réalisation particulier, le contrôleur 11 peut déclencher les enregistrements en simultané des différentes premières 31, 31' et deuxièmes 33, 33' unités de prise de vue du dispositif de caractérisation d'un incendie 1 lorsque celui-ci comprend plusieurs systèmes de stéréovision 3, 3'. Ce déclenchement en simultané des différentes prises de vue permet de synchroniser les images prises par les premières 31, 31' et deuxièmes 33, 33' unités de prises de vue pour la détermination des caractéristiques géométriques du feu lors de l'utilisation de plusieurs systèmes de stéréovision 3, 3'.

De manière alternative, chaque système de stéréovision 3, 3' peut comprendre une unité de prise de vue « maître », comme par exemple la première unité de prise de vue 31, 31', et une unité de prise de vue « esclave », comme par exemple la deuxième unité de prise de vue 33, 33'. L'unité de prise de vue « maître » comporte une horloge interne et impose la rythme d'acquisition des images prises par l'unité de prise de vue « esclave ». Selon cette alternative, le contrôleur 11 envoie une onde exploitée par la caméra « maître » de chaque système de stéréovision 3, 3' qui impose son horloge à la caméra « esclave ». Il est ainsi également possible de synchroniser les prises de vues des différentes unités de prise de vue 31, 31', 33, 33'.

D'autre part, toujours selon le mode de réalisation particulier de la figure 1, le dispositif de caractérisation d'un incendie 1 peut comporter en outre une base de données 12 en communication avec l'unité de traitement 5. La base de données 12 est configurée pour stocker au moins les relations linéaires calibrées avec les caractéristiques géométriques du feu et les catégories prédéterminées de feu. La base de données 12 peut être en communication avec l'unité de traitement 5 via une liaison filaire ou via une liaison sans fil. Selon le mode de réalisation particulier de la figure 1, la base de données 12 est déportée de l'unité de traitement 5, 5'. Selon une alternative non représentée ici, la base de données 12 peut être intégrée à l'une des unités de traitement 5, 5' ou encore à chaque unité de traitement 5, 5'.

En référence aux figures 2 et 3, il est représenté plus en détail le système de stéréovision 3 selon un mode de réalisation particulier. Selon ce mode de réalisation particulier, le système de stéréovision 3 peut comporter en outre un système de localisation 35 de précision centimétrique et une centrale inertielle (non représentée ici). Ce système de localisation 35 est configuré pour transmettre à l'au moins une unité de traitement 5 la position des premier A1 et deuxième A2 axes optiques des première 31 et deuxième 33 unités de prise de vue du système de stéréovision 3. Par ailleurs, la centrale inertielle est configurée pour transmettre à l'au moins une unité de traitement 5 l'inclinaison et l'orientation des premier A1 et deuxième A2 axes optiques des première 31 et deuxième 33 unités de prise de vue.

Le système de stéréovision 3 peut comporter en outre une barre 13 sur laquelle sont disposées les première 31 et deuxième 33 unités de prise de vue du système de stéréovision 3. Les première 31 et deuxième 33 unités de prise de vue du système de stéréovision 3 sont déplaçables sur cette barre 13 afin d'adapter la distance d prédéterminée entre les premier A1 et deuxième A2 axes optiques des première 31 et deuxième 33 unités de prise de vue en fonction de la distance D entre le système de stéréovision 3 et l'incendie 2. De plus, la barre 13 est installée sur un trépied 15 présentant une tige 17 ajustable en hauteur afin de permettre un réglage en hauteur simultané des premier A1 et deuxième A2 axes optiques du système de stéréovision 3. D'autre part, la barre 13 est reliée au trépied 15 par une pince 19 configurée pour permettre une rotation de la barre 13 sur elle-même. Cette rotation sur elle-même de la barre 13 permet d'adapter l'inclinaison des premier A1 et deuxième A2 axes optiques des première 31 et deuxième 33 unités de prise de vue de manière simultanée. Ainsi, le système de stéréovision 3 représenté en référence aux figure 2 et 3 est simple et rapide de réglage afin de pouvoir une opérabilité rapide du dispositif de caractérisation d'un incendie 1.

Selon le mode de réalisation particulier de la figure 3, le dispositif de caractérisation d'un incendie 1 est embarqué sur un véhicule automobile 20. Le dispositif de caractérisation d'incendie 1 est donc facilement transportable et peu encombrant. D'autre part, ce dispositif de caractérisation d'incendie 1 peut être déplacé au cours d'un incendie, et notamment approché ou éloigné de ce dernier en fonction des règles de sécurité à suivre selon les flux radiatifs F déterminés par l'unité de traitement 5. Selon une alternative non représentée ici, la barre 13 peut être directement fixée sur un bâtiment par exemple ou être fixé directement sur le véhicule automobile 20.

En référence aux figures 1 à 3, le système de stéréovision 3 peut être un système de stéréovision 3 multimodale configuré pour prendre des images dans le domaine du visible d'une part et des images dans le domaine de l'infra-rouge d'autre part. La prise d'images dans le domaine de l'infra-rouge permet de s'affranchir de la perturbation des images liée aux fumées de l'incendie 2. En effet, selon le combustible du feu, des fumées plus ou moins sombres et épaisses peuvent être formées. Dans le cas d'images prises dans le domaine du visible, il est possible que ces fumées fassent écran et masquent au moins partiellement l'incendie 2, ce qui serait préjudiciable à la détermination d'une de ses caractéristiques géométriques afin de pouvoir remonter aux flux radiatifs F émis par cet incendie 2. Dans le cas d'images prises dans le domaine de l'infra-rouge, la présence de ces fumées ne perturbe pas les images prises car ces dernières correspondent à des images thermiques de la scène filmée.

Selon les modes de réalisation particuliers représentés en référence aux figures 1 à 3, la première unité de prise de vue 31 du système de stéréovision 3 multimodale est configurée pour prendre des images dans le domaine du visible et la deuxième unité de prise de vue 33 du système de stéréovision 3 multimodale est configurée pour prendre des images dans le domaine de-l'infra-rouge.

Selon une alternative non représentée ici, les première 31 et deuxième 33 unités de prise de vue du système de stéréovision 3 multimodale peuvent être toutes deux configurées pour prendre des images dans le domaine du visible et dans le domaine de l'infra-rouge.

Plus particulièrement, selon ces modes de réalisation particuliers, les première 31 et deuxième 33 unités de prises de vues peuvent être des caméras. Ces caméras peuvent par exemple et de manière non-exhaustive être choisies parmi les suivantes :

- Caméra multispectrale AD-080GE, fabricant : JAI, cette caméra capture des images dans le domaine du visible et de l'infra-rouge et propose une résolution de 1024x768 pixels ;
- Caméra DFK 72BUC02, fabricant : Image Sourcing, cette caméra capture des images dans le domaine du visible et propose une résolution de 1280x960 pixels ;
- Caméra Jade 3MW, fabricant : CEDIP, cette caméra capture des images dans le domaine de l'infra-rouge et propose une résolution de 256x256 pixels ;
- Caméra One Pro, fabricant : FLIR, cette caméra capture des images dans le domaine de l'infra-rouge et propose une résolution de 1440x1080 pixels ;
- Caméra IR-TCM 384, fabricant : Jaenoptik, cette caméra capture des images dans le domaine de l'infra-rouge et propose une résolution de 384x576 pixels ; ou encore
- Caméra Bumblebee XB3, fabricant : Point Grey, cette caméra capture des images dans le domaine du visible et propose une résolution de 1280x960 pixels.

Les inventeurs de la présente invention ont identifié une relation linéaire existant entre le flux radiatif F et au moins une caractéristique géométrique du feu lors de différentes expériences qui ont été menées sur des incendies contrôlés 2' avec un dispositif de caractérisation d'un incendie 1' comprenant également au moins un système de stéréovision 3 et au moins une unité de traitement 5, tel que représenté en référence à la figure 4. Selon le mode de réalisation de la figure 4, le dispositif de caractérisation d'un incendie 1' comporte deux dispositifs de stéréovision 3, 3'. Afin de ne pas surcharger cette figure 4, certains éléments présents sur la figure 1 n'ont pas été représentés, comme par exemple les axes optiques A1, A1', A2, A2', les distances D, D' entre la périphérie de l'incendie et le dispositif de stéréovision 3, 3', les unités de prise de vue 31, 31', 33, 33', les distances d, d' séparant ces unités de prise de vue, etc. Or, ces éléments sont tout de même présents sur cette figure 4. En complément du dispositif de caractérisation d'un incendie 1 décrit en référence à la figure 1, ce dispositif de caractérisation d'un incendie 1', représenté sur la figure 4, présente des capteurs de flux radiatif C1-C4 configurés pour mesurer le flux radiatif F émis par l'incendie contrôlé 2'. De manière évidente, l'utilisation de tels capteurs de flux radiatifs C1-C4 en situation opérationnelle, c'est-à-dire lors d'un incendie 2 non contrôlé, n'est pas possible pour des raisons de sécurité des opérationnels installant ces capteurs de flux radiatifs C1-C4 sur le terrain qui nécessiteraient d'être déplacé au fur et à mesure de l'avancée du feu. Les capteurs de flux radiatifs C1-C4 sont disposés de la manière suivante : trois capteurs C1-C3 sont disposés alignés parallèlement à la longueur de l'incendie contrôlé 2' et espacés les uns des autres d'une distance de 1 mètre environ, et deux capteurs C2 et C4 sont disposés alignés perpendiculairement à cette longueur de l'incendie contrôlé 2' et espacés également l'un de l'autre par une distance de 1 mètre environ. En effet, l'intensité du flux radiatif F diminue lorsque l'on s'éloigne d'un incendie. Ainsi, les inventeurs ont trouvé une relation linéaire existant entre au moins une caractéristique géométrique du feu et le flux radiatif F émis par cet incendie contrôlé 2' ou non 2, la variation de distance entre les différents capteurs de flux C1-C4 par rapport à l'incendie contrôlé 2' est un paramètre à prendre en considération. En effet, le flux radiatif mesuré diminue avec l'augmentation de la distance entre l'incendie 2' et le capteur de flux C1-C4, mais la relation linéaire entre au moins une caractéristique géométrique du feu et le flux radiatif F existe toujours.

En référence à la figure 5A, il est représenté le résultat des mesures de flux radiatif F réalisées par les capteurs de flux C2 et C4 de la figure 4 en fonction de la surface S de l'incendie contrôlé 2', correspondant à une caractéristique géométrique du feu, dont la mesure est réalisée par l'unité de traitement 5. Comme cela a été indiqué précédemment, le capteur de flux C4 présente une distance par rapport à l'incendie 2' supérieure de 1 mètre par rapport à celle du capteur de flux C2. Sur cette figure 5A, la courbe 71 correspond à la droite de calibrage pour le capteur de flux C2 et la courbe 73 correspond à la courbe de calibrage pour le capteur de flux C4. D'après cette figure 5A, on remarque que les différents points de corrélation entre la surface S de cet incendie contrôlé 2' et le flux radiatif F mesuré par les capteurs de flux C2, C4 suivent leur droite de calibrage 71, 73 respectives. Par ailleurs, ces différents points de corrélation présentent respectivement pour les droites de calibrages 71, 73 un coefficient de détermination ($R^2$) dans le cas d'une régression linéaire de 0,96 (pour la courbe 71) et de 0,97 (pour la courbe 73), ce qui permet de confirmer le caractère linéaire entre l'évolution du flux radiatif F venant du feu et la surface S de cet incendie contrôlé 2' ou non 2. En effet, plus un coefficient de détermination ($R^2$) dans

le cas d'une régression linéaire est proche de 1, plus les points sont alignés, la valeur 1 étant obtenue pour une droite parfaite.

Par ailleurs, en référence à la figure 5B, il est représenté le résultat des mesures de flux radiatif F réalisées par les capteurs C2 et C4 de la figure 4 en fonction du volume V de l'incendie contrôlé 2', correspondant à une caractéristique géométrique du feu, dont la mesure est réalisée par l'unité de traitement 5. La disposition des capteurs C2 et C4 est la même que celle utilisée en référence à la figure 5A. Sur cette figure 5B, la courbe 75 correspond à la droite de calibrage pour le capteur de flux C2 et la courbe 77 correspond à la droite de calibrage pour le capteur de flux C4. D'après cette figure 5B, on remarque que les différents points de corrélation entre le volume V de cet incendie contrôlé 2' et le flux radiatif F mesuré par les capteurs de flux C2, C4 suivent leur droite de calibrage 75, 77 respectives. Par ailleurs, ces différents points de corrélation présentent respectivement pour les droites de calibrages 75, 77 un coefficient de détermination ($R^2$) dans le cadre d'une régression linéaire de 0,99 (pour chacune des courbes 75 et 77), ce qui permet de confirmer le caractère linéaire entre l'évolution du flux radiatif F venant du feu et le volume V de cet incendie contrôlé 2' ou non 2.

En référence à la figure 6, il est représenté un diagramme présentant l'évolution du flux radiatif (courbe 91) et l'évolution du volume de feu (courbe 93) en fonction du temps t. Plus particulièrement, ces courbes 91, 93 sont construites avec des valeurs filtrées par moyenne mobile afin de couper les fluctuations hautes fréquences. Cette figure 6 présente également les différents stades d'évolution de l'incendie 2. Plus particulièrement, la période S1 correspond au départ de l'incendie 2, la période S2 correspond à l'incendie 2 développé et la période S3 correspond à l'extinction de l'incendie 2. Comme cela est représenté sur cette figure 6, les évolutions du flux radiatif F émis par l'incendie 2 et du volume V de cet incendie 2 sont semblables pendant la période S2. En effet, lorsque le volume V de l'incendie augmente, le flux radiatif F de celui-ci augmente sensiblement de la même manière, il en est de même lorsque le volume V de cet incendie 2 diminue. Cette figure 6, montre donc l'existence d'une proportionnalité, et donc d'une relation linéaire, entre l'évolution du volume V de l'incendie 2 et l'évolution du flux radiatif F émis par cet incendie 2.

Ensuite, en référence à la figure 7, il est représenté de manière schématique les diagrammes de dispersion entre les différentes caractéristiques géométriques du feu, à savoir : la surface du feu S, et le volume de feu V, et les différents capteurs de flux C1-C4 tels que disposés en référence à la figure 4. Plus particulièrement, ces différents diagrammes représentent des fluctuations autour de la valeur moyenne définie précédemment par moyenne mobile. Selon ce diagramme de dispersion, les différents capteurs de flux C1-C4 présentent chacun un diagramme de dispersion se présentant sensiblement sous la forme d'une droite, ce qui permet également de justifier de l'existence d'une relation linéaire liant l'évolution du flux radiatif émis par un feu et en particulier le volume ou la surface de cet incendie 2. De ce fait, il est possible de pouvoir déterminer assez facilement et rapidement les flux radiatifs venant du feu afin de pouvoir déterminer des zones dans lesquelles ce flux radiatif est supérieur à un seuil prédéfini afin de permettre l'évacuation des opérationnels au sol et de leur équipement, tels que les véhicule de lutte par exemple, ou encore afin de permettre la progression de ces opérationnels selon les flux radiatifs F ainsi mesurés.

En revenant sur la figure 1, lorsque le dispositif de caractérisation d'un incendie 1 comporte un seul système de stéréovision 3, l'unité de traitement 5 est configurée pour déterminer le flux radiatif F à partir d'une relation linéaire avec une caractéristique géométrique bidimensionnelle du feu. L'utilisation d'un seul système de stéréovision permet de déterminer la surface du front de feu, la surface de feu, ou encore le dimensionnement du front de feu par exemple. Cette caractéristique géométrique bidimensionnelle du feu peut être représentée par une courbe tridimensionnelle. L'utilisation d'un seul système de stéréovision 3 peut être particulièrement efficace lorsqu'il s'agit d'un incendie 2 statique, comme par exemple l'incendie d'un véhicule, d'un puits de pétrole, ou encore d'un bâtiment. Plus particulièrement, l'utilisation d'un seul système de stéréovision 3 peut être particulièrement efficace lorsque l'incendie 2 présente une configuration simple, comme par exemple un front de feu rectiligne. Lorsque le dispositif de caractérisation d'un incendie 1 comporte un seul système de stéréovision 3, il n'est pas possible d'obtenir le volume de feu V, mais on peut obtenir la surface de feu S, l'aire du front de feu, ou encore la surface du front de feu. En effet, dans un tel cas, il n'est pas possible d'accéder aux images de l'arrière du feu par exemple lorsque le système de stéréovision 3 est disposé de manière à prendre des images du front de feu.

Selon un aspect particulier de ce mode de réalisation mettant en oeuvre uniquement un système de stéréovision 3, une relation linéaire calibrée peut être exprimée sous la forme suivante :

$$F = \beta . S_F$$

avec : F le flux radiatif déterminé (en kW/m²), $\beta$ un coefficient de calibration dépendant notamment du type de feu, et $S_F$ la surface du front de feu en mètres carré déterminé par le système de stéréovision 3. Selon le type de caractéristique géométrique considéré, un type similaire de relation linéaire peut être utilisé à ceci près que le coefficient de calibration peut être modifié et la valeur de la caractéristique géométrique également. Par ailleurs, la valeur du coefficient de calibration $\beta$ est adaptée au type de feu considéré. En effet, la valeur de ce coefficient de calibration $\beta$ prend des valeurs différentes s'il s'agit d'un feu de forêt ou d'un feu industriel par exemple.

L'utilisation d'un unique système de stéréovision 3, même si elle peut nécessiter des conditions particulières, notamment en ce qui concerne la configuration du feu est assez simple à mettre en oeuvre.

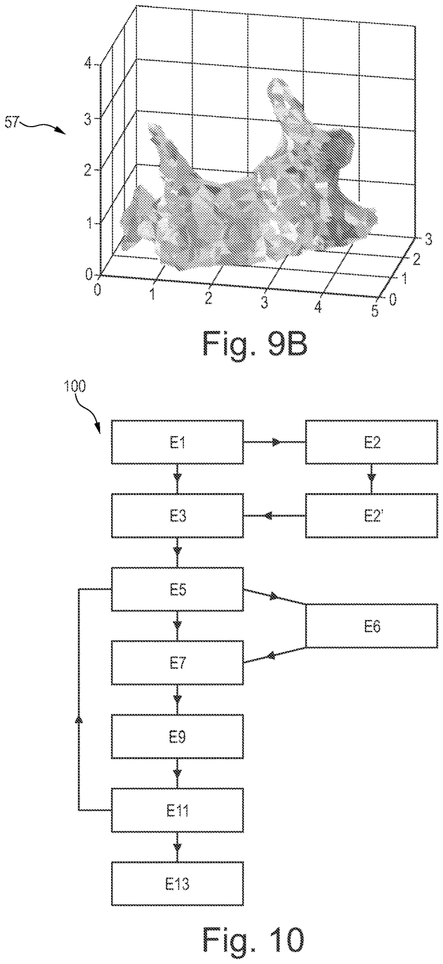

De manière alternative, représentée en référence aux figures 8A et 8B, lorsque le dispositif de caractérisation d'un incendie 1 comporte deux systèmes de stéréovision 3, 3', l'unité de traitement 5, 5' est configurée pour déterminer le flux radiatif F à partir d'une relation linéaire avec une caractéristique géométrique bidimensionnelle ou tridimensionnelle du feu. Selon cette alternative, les systèmes de stéréovision 3, 3' sont configurés pour être disposés de manière à prendre des angles de vue différents du feu afin de déterminer le volume de feu V par exemple. La détermination du volume de feu V est réalisée en appliquant une triangulation à tous les points tridimensionnels du feu présents dans les images capturées par les première 31 et deuxième 33 unités de prise de vue, comme par exemple une triangulation de Delaunay. Cette triangulation permet d'obtenir une forme fermée (représentée en référence à la figure 9B) à partir de laquelle la surface S et le volume V de feu sont déterminés. Par ailleurs, il est également possible de déterminer la surface frontale du feu par rapport à une cible géolocalisée, ou encore de déterminer le facteur de forme de cet incendie 2. L'utilisation de deux systèmes de stéréovision 3, 3', couvrant des perspectives différentes comme cela est décrit ultérieurement en référence aux figures 8A et 8B, peut être particulièrement efficace par exemple lorsqu'il s'agit d'un incendie 2 se propageant, comme par exemple un feu de forêt.

Selon cette alternative dans laquelle deux systèmes de stéréovision 3, 3' sont utilisé afin de déterminer une caractéristique géométrique du feu 2, la relation linéaire calibrée permettant de déterminer le flux radiatif F émis par l'incendie 2 peut être exprimée sous la forme suivante :

$$F = \gamma . V$$

avec : F le flux déterminé (en kW/m²), $\gamma$ un coefficient de calibration dépendant notamment du type de feu, et V le volume de feu déterminé par les systèmes de stéréovision 3, 3'. Comme précédemment, selon le type de caractéristique géométrique considéré, un type similaire de relation linéaire calibrée peut être utilisé à ceci près que le coefficient de calibration peut être modifié et la valeur de la caractéristique géométrique également. Par ailleurs, la valeur du coefficient de calibration $\gamma$ est adaptée selon le type de feu considéré et peut avoir des valeurs différentes s'il s'agit d'un feu de forêt ou d'un feu industriel par exemple. L'utilisation de deux systèmes de stéréovision 3, 3' et l'étude du volume de feu V permet d'avoir une estimation plus précise des flux radiatifs F émis par l'incendie par le dispositif de caractérisation d'un incendie 1 que lorsqu'un seul système de stéréovision 3 est utilisé.

Selon les modes de réalisation particuliers représentés en référence aux figures 8A et 8B, les systèmes de stéréovision 3, 3' sont disposés de manière à ce que les axes optiques A1, A2, A1', A2' de leurs premières 31, 31' et deuxièmes 33, 33' unités de prise de vues forment un angle $\alpha$. Afin de pouvoir obtenir les trois dimensions de cet incendie 2, l'angle $\alpha$ formé par les premier A1 et deuxième A2 axes optiques d'un des systèmes de stéréovision 3 et les premier A1' et deuxièmes A2' axes optiques de l'autre système de stéréovision 3' est compris entre 90° et 180°.

Plus particulièrement selon le mode de réalisation particulier de la figure 8A, l'angle $\alpha$ est de 180° environ, c'est-à-dire que l'un des systèmes de stéréovision 3 est disposé d'un côté de l'incendie 2 et l'autre système de stéréovision 3' est disposé à l'opposé. Par ailleurs, selon ce mode de réalisation particulier, l'un des systèmes de stéréovision 3 est disposé à l'arrière de l'incendie et l'autre des systèmes de stéréovision 3' est disposé de manière à prendre des images du front de feu. Selon ce mode de réalisation, ce feu se propage selon la flèche P.

D'autre part, selon le mode de réalisation particulier de la figure 8B, l'angle $\alpha$ est de 90° environ, c'est-à-dire que les systèmes de stéréovision 3, 3' sont disposés de manière à ce que les axes optiques A1, A2 d'un des systèmes de stéréovision 3 et les axes optiques A1', A2' de l'autre système de stéréovision 3' soit sensiblement perpendiculaires. Selon ce mode de réalisation particulier, l'incendie 2 se propage également selon la flèche P.

Avec de telles dispositions des systèmes de stéréovision 3, 3' représentées en référence aux figures 8A et 8B, il est possible d'obtenir des images permettant de remonter aux différentes dimensions de cet incendie 2 afin d'en extraire les caractéristiques géométriques de ce feu.

Par ailleurs, les distances D et D' séparant les dispositif de stéréovision 3, 3' de l'incendie 2 peuvent être différentes et les distances d et d' séparant les premières unités de prise de vue 31, 31' et la deuxièmes unités de prise de vue 33, 33' de chacun des systèmes de stéréovision 3, 3' peuvent être différentes et adaptées respectivement aux distances D et D'.

L'utilisation de deux systèmes de stéréovision 3, 3' même si elle peut être plus lourde à mettre en oeuvre permet d'obtenir une détermination complète de la caractéristique géométrique du feu (bi-dimensionnelle et tri-dimensionnelle) considérée et par conséquent une détermination plus précise du flux radiatif F émis par cet incendie 2.

En revenant sur la figure 1, et pour permettre une détermination des flux radiatifs F plus fine, l'unité de traitement 5 peut être configurée pour déterminer une incertitude de positionnement au sol de l'incendie 2 selon un axe transversal à l'incendie 2, ladite incertitude de positionnement au sol de l'incendie 2 étant déterminée par la relation :

$$\Delta z = \frac{z^2}{Bf} \Delta d$$

dans laquelle :

- z correspond à la distance D réelle entre l'incendie 2 et l'au moins un système de stéréovision 3 (en mètres),
- B correspond à la distance d entre les premier A1 et deuxième A2 axes optiques (en mètres) au niveau des première 31 et deuxième 33 unités de prise de vue de l'au moins un système de stéréovision 3,
- f correspond à la distance focale des première 31 et deuxième 33 unités de prise de vue (en pixels) de l'au moins un système de stéréovision 3, et
- $\Delta$d l'incertitude de disparité des pixels (en pixels).

En référence à la figure 9A, il est représenté une combinaison des points tridimensionnels de feu déterminés depuis les images prises par les systèmes de stéréovision 3, 3' de la figure 8B. Plus particulièrement la représentation 51 correspond aux points tridimensionnels de feu déterminés par l'un des systèmes de stéréovision 3 par triangulation, correspondant à une vue latérale de cet incendie 2, la représentation 53 correspond aux points tridimensionnels de feu déterminés par l'autre système de stéréovision 3' par triangulation, correspondant à une vue du front de feu, et la représentation 55 correspond à la combinaison faite par l'unité de traitement 5 (visible sur la figure 1) des points tridimensionnels de feu déterminés par les systèmes de stéréovision 3, 3' par triangulation permettant de déterminer différentes caractéristiques géométriques de ce feu et cartographiant ce feu. Afin d'identifier et de sélectionner les points tridimensionnels de feu (également appelés pixels de feu), l'unité de traitement 5 utilise une méthode traditionnelle connue de l'art antérieur, comme cela est par exemple décrit dans la thèse du Docteur Tom Toulouse, intitulée « Estimation par stéréovision multimodale des caractéristiques géométriques d'un feu de végétation en propagation ».

Par ailleurs, en référence à la figure 9B, il est représenté la structure tridimensionnelle du feu reconstituée à partir des points tridimensionnels de feu déterminés par les systèmes de stéréovision 3, 3' de la figure 8A par l'unité de traitement 5. Cette représentation tridimensionnelle peut être la cartographie représentée sur l'unité d'affichage 9 (représenté sur la figure 1 par exemple) afin de permettre le guidage des unités opérationnelles au sol par exemple. En effet, l'exploitation des points tridimensionnels de feu au sol permet de déterminer la ligne de front de feu par exemple, ce qui permet par exemple de déterminer la direction de déplacement de cet incendie 2 et plus particulièrement les zones à arroser de manière à lutter plus efficacement contre cet incendie 2, ou encore les zones exposées à un flux radiatifs supérieur à une valeur seuil prédéterminée et que les opérationnels par exemple doivent évacuer.

En référence à la figure 10, il est représenté de manière schématique un procédé de détermination de flux radiatifs 100 dans des zones exposées à un flux radiatif F émis par un incendie 2. Ce procédé de détermination de flux radiatifs 100 met en oeuvre un dispositif de caractérisation d'un incendie 1, comprenant au moins un système de stéréovision 3 présentant une première 31 et une deuxième 33 unités de prise de vue et une unité de traitement 5, tel qu'il a été décrit en référence aux figures 1 à 3 et 8A, 8B.

Le procédé de détermination de flux radiatifs 100 comprend une étape de positionnement E1 de l'au moins un système de stéréovision 3 de manière à ce que les première 31 et deuxième 33 unités de prise de vue du système de stéréovision 3 ont une vue en au moins deux dimensions de l'incendie 2.

Le procédé de détermination de flux radiatifs 100 comprend ensuite une étape d'entrée E3 dans l'unité de traitement 5 de la distance D entre le système de stéréovision 3 et la périphérie de l'incendie 2 la plus proche du système de stéréovision 3. En fonction de cette distance D entre le système de stéréovision 3 et l'incendie 2 il peut être possible de modifier la distance d entre les premier A1 et deuxième A2 axes optiques du système de stéréovision 3, en rapprochant ou en éloignant les première 31 et deuxième 33 unités de prise de vue.

Le procédé de détermination de flux radiatifs 100 met ensuite en oeuvre une étape de déclenchement E5 de la prise d'images de l'incendie 2 par les première 31 et deuxième 33 unités de prise de vue de l'au moins un système de stéréovision 3. Selon un mode de réalisation particulier, les première 31 et deuxième 33 unités de prise de vue de l'au moins un dispositif de stéréovision 3 peuvent être configurées pour prendre par exemple entre 1 et 10 images par seconde. Avec de telles fréquences de prise d'images, il est possible de réaliser un suivi de l'évolution de l'incendie 2 en temps réel

Le procédé de détermination de flux radiatifs 100 comprend ensuite une étape de détermination d'au moins une caractéristique géométrique du feu E7 par l'unité de traitement 5, puis une étape de détermination d'un flux radiatif E9 dans différentes zones exposées à un flux radiatif F émis par l'incendie 2 par l'unité de traitement 5 à l'aide d'une relation linéaire calibrée avec au moins une caractéristique géométrique du feu et au moins une catégorie de feu choisie parmi plusieurs catégories prédéterminées de feu. La catégorie prédéterminée de feu peut être sélectionnée préalablement à l'étape de positionnement E1 du système de stéréovision 3, ou encore au cours d'une des étapes précédant cette étape de détermination d'au moins une caractéristique géométrique du feu E7. Le procédé de détermination de flux radiatifs 100 met ensuite en oeuvre une étape de représentation d'une cartographie E11 présentant les caractéristiques géométriques du feu et les flux radiatifs F dans différentes zones exposées à un flux radiatif F émis par l'incendie 2 sur une unité d'affichage 9 en communication avec l'unité de traitement 5. Selon un mode de réalisation particulier, les étapes de détermination de l'au moins une caractéristique géométrique du feu E7, de détermination d'un flux radiatif E9 et de représentation E11 peuvent être réitérées à chaque image prise par l'au moins un système de stéréovision 3 afin de permettre une détermination de l'évolution temporelle des flux radiatifs F dans les zones exposées à un flux radiatif F émis par l'incendie 2. Par ailleurs, il est possible de communiquer en temps réel aux unités opérationnelles sur le terrain l'évolution de l'incendie 2 afin de pouvoir permettre leur évacuation ainsi que celle du matériel lorsque le flux radiatif F émis par l'incendie dépasse un seuil prédéterminé. Par ailleurs, il peut également être possible de piloter leur progression en cas de détection d'une diminution de ce flux radiatif F afin de permettre une lutte plus efficace contre cet incendie. De plus, il est possible grâce à ce procédé de détermination de flux radiatifs 100, et notamment l'utilisation du dispositif de caractérisation d'un incendie 1, utilisant une détection optique, de déterminer des flux radiatifs F à distance du feu afin de garantir la sécurité des opérationnels et des matériels comme cela a été indiqué précédemment. Lors de la mise en oeuvre de l'étape de détermination d'un flux radiatif E9, l'unité de traitement 5 compare les caractéristiques géométriques du feu et la catégorie de feu avec des données pré-enregistrées, lesdites données pré-enregistrées comprenant au moins les relations linéaires calibrées avec les caractéristiques géométriques du feu et les catégories prédéterminées de feu, dans l'unité de traitement 5 ou dans la base de données 12, lorsqu'elle est présente, afin de permettre de générer le modèle linéaire représentatif du flux radiatif F émis par l'incendie 2. Le référencement des différentes données pré-enregistrées et la relation linéaire entre au moins une caractéristique géométrique du feu et le flux radiatif F émis par ce feu sont développés plus en détail ultérieurement.

Selon un mode de réalisation particulier et de manière optionnelle, seuls les flux radiatifs F présentant une valeur supérieure à un seuil prédéterminé sont affichés sur l'unité d'affichage 9 de manière à définir des zones de danger.

De manière optionnelle, le dispositif de caractérisation d'un incendie peut comprendre un anémomètre 7 en communication avec l'unité de traitement 5 (représentés sur la figure 1). Dans ce cas, le procédé de détermination de flux radiatifs 100 peut comprendre en outre une étape de positionnement et de localisation E2 de l'anémomètre 7. Cette étape de positionnement et de localisation E2 de l'anémomètre 7 est réalisée en amont de l'étape d'entrée E3 dans l'unité de traitement 5 de la distance D entre le système de stéréovision 3 et la périphérie de l'incendie 2 la plus proche du système de stéréovision 3. L'anémomètre 7 peut être disposé à une hauteur de 2 mètres du sol par exemple. Une telle disposition de l'anémomètre 7 permet d'avoir une bonne connaissance des caractéristiques du vent pouvant modifier les flux radiatifs F émis par l'incendie 2.

Lorsque le dispositif de caractérisation d'un incendie 1 présente l'anémomètre 7, le procédé de détermination de flux radiatifs 100 peut également comprendre une étape de mesure des caractéristiques du vent E2' de manière à ce que l'unité de traitement 5 corrige la valeur du flux radiatif F déterminé en fonction de ces caractéristiques du vent lors de l'étape de détermination d'un flux radiatif E9. Selon un mode de réalisation particulier, l'anémomètre 7 peut effectuer des analyses des caractéristiques du vent avec une fréquence de 1 Hz, c'est-à-dire toutes les secondes.

D'autre part, il peut être nécessaire de déplacer le système de stéréovision 3 au cours d'un incendie 2, pour des raisons de sécurité par exemple, ou l'incendie 2 peut aussi se déplacer et notamment sortir du champ de vision des première 31 et deuxième 33 unités de prises de vues. Dans un tel cas, le procédé de détermination de flux radiatifs 100 peut comprendre en outre, et de manière optionnelle, une étape de reparamétrage E13 de l'unité de traitement 5. D'une manière générale, cette étape de reparamétrage E13 peut être réalisée en cas de modification importante de la distance D entre le système de stéréovision 3 et la périphérie de l'incendie 2 la plus proche du système de stéréovision 3, telle que l'incendie 2 ne peut plus être vu dans sa globalité par le système de stéréovision 3.

Par ailleurs, lorsque le système de stéréovision 3 utilisé par le dispositif de caractérisation d'un incendie 1 est un système de stéréovision 3 multimodale, le procédé de détermination de flux radiatifs 100 peut comprendre en outre une étape de superposition E6 des images prises dans le domaine du visible et dans le domaine du proche infra-rouge. Cette étape de superposition E6 est réalisée entre l'étape de déclenchement E5 de la prise d'images du feu et de détermination de au moins une caractéristique géométrique du feu E7. En effet, comme cela a été développé précédemment, l'utilisation d'images prises dans le domaine du proche infra-rouge permet de s'affranchir des problèmes de détections liés à la présence de fumées.

Le procédé de détermination de flux radiatifs 100 permet donc de mesurer l'exposition des biens et des personnels aux flux radiatifs F émis par l'incendie 2 afin de prendre les mesures adaptées. Par ailleurs, ce procédé 100 permet également de cibler les zones de feu qui nécessitent un traitement urgent pour limiter en priorité le flux radiatif F émis par ces zones de feu. D'autre part le dispositif de caractérisation d'un incendie 1 lorsqu'il est embarqué sur un véhicule automobile 20, éventuellement mobile au sol, peut donner une cartographie du flux radiatif F rayonnée étendu devant le front de feu afin de pouvoir réaliser un suivi de cet incendie 2.

## Revendications

**1.** Dispositif de caractérisation d'un incendie (1) comprenant :

• au moins un système de stéréovision (3) comportant une première (31) et une deuxième (33) unités de prise de vue configurées pour prendre des images d'un incendie (2), lesdites première (31) et deuxième (33) unités de prise de vue présentant chacune un axe optique (A1, A2), lesdits premier (A1) et deuxième (A2) axes optiques étant séparés l'un de l'autre par une distance (d) prédéterminée au niveau des première (31) et deuxième (33) unités de prise de vues ; et

• au moins une unité de traitement (5) configurée pour combiner les images prises par les première (31) et deuxième (33) unités de prise de vue de l'au moins un système de stéréovision (3) afin de déterminer au moins une caractéristique géométrique du feu, l'au moins une caractéristique géométrique du feu peut être choisie parmi : la surface du front de feu, la surface de feu (S), ou le volume de feu (V); l'unité de traitement (5) est configurée pour déterminer un flux radiatif (F) dans différentes zones exposées à un flux radiatif (F) émis par l'incendie (2); **caractérisé en ce que** le flux radiatif (F) est déterminé à partir d'une relation linéaire calibrée établie entre un flux radiatif d'un feu de référence en fonction d'au moins une des caractéristiques géométriques du feu et d'au moins une catégorie de feu choisie parmi plusieurs catégories prédéterminées de feu afin de pouvoir déterminer des zones exposées à un flux radiatif (F) émis par l'incendie (2) dépassant un seuil de référence;

le dispositif de caractérisation d'un incendie (1) comprend en outre une unité d'affichage (9) en communication avec l'unité de traitement (5) configurée pour représenter une cartographie (E11) présentant les caractéristiques géométriques du feu et les flux radiatifs (F) dans différentes zones exposées à un flux radiatif (F) émis par l'incendie (2).

**2.** Dispositif de caractérisation d'un incendie (1) selon la revendication précédente, **caractérisé en ce qu'**il comporte en outre un anémomètre (7) configuré pour déterminer des caractéristiques du vent, ledit anémomètre (7) étant relié à l'unité de traitement (5), l'unité de traitement (5) étant configurée pour corriger le flux radiatif (F) de l'incendie (2) en fonction des caractéristiques du vent.

**3.** Dispositif de caractérisation d'un incendie (1) selon l'une quelconque des revendications précédentes, **caractérisé en ce que** l'au moins un système de stéréovision (3) comporte en outre un système de localisation (35) de précision centimétrique, configuré pour transmettre à l'au moins une unité de traitement (5) la position, l'inclinaison et l'orientation des premier (A1) et deuxième (A2) axes optiques des première (31) et deuxième (33) unités de prise de vue de l'au moins un système de stéréovision (3).

**4.** Dispositif de caractérisation d'un incendie (1) selon l'une quelconque des revendications précédentes, **caractérisé en ce que** l'au moins une unité de traitement (5) est configurée pour cartographier les caractéristiques géométriques du feu et les flux radiatifs (F) de différentes zones exposées à un flux radiatif (F) émis par l'incendie(2), ladite unité de traitement (5) étant en communication avec une unité d'affichage (9) configurée pour afficher cette cartographie.

**5.** Dispositif de caractérisation d'un incendie (1) selon l'une quelconque des revendications précédentes, **caractérisé en ce que** l'au moins un système de stéréovision (3) est un système de stéréovision (3) multimodale configuré pour prendre des images dans le domaine du visible d'une part et des images dans le domaine du proche infra-rouge d'autre part.

**6.** Dispositif de caractérisation d'un incendie (1) selon l'une quelconque des revendications précédentes, **caractérisé en ce que** l'au moins une unité de traitement (5) est configurée pour suivre l'au moins une caractéristique géométrique du feu en fonction du temps de manière à déterminer l'évolution temporelle de l'incendie (2) et de suivre les flux radiatifs (F) des différentes zones exposées à un flux radiatif émis par l'incendie (2) en fonction de cette évolution temporelle de l'incendie.

**7.** Dispositif de caractérisation d'un incendie (1) selon l'une quelconque des revendications 1 à 6, **caractérisé en ce qu'**il comporte un seul système de stéréovision (3) et **en ce que** l'unité de traitement (5) est configurée pour déterminer le flux radiatif (F) à partir d'une relation linéaire avec une caractéristique géométrique bidimensionnelle du feu.

**8.** Dispositif de caractérisation d'un incendie (1) selon la revendication 7, **caractérisé en ce que** la relation linéaire calibrée répond à l'équation :

$$F = \beta.S_F$$

avec :

• F : la valeur du flux radiatif déterminée en kW/m$^2$ ;
• $\beta$ : un coefficient de calibration ; et
• $S_F$: la surface du front de feu mesurée en mètres carré.

**9.** Dispositif de caractérisation d'un incendie (1) selon l'une quelconque des revendicationq 1 à 6, **carac-**

térisé en ce qu'il comporte deux systèmes de stéréovision (3, 3') configurés pour être disposés de manière à prendre des angles de vue différents du feu afin de déterminer le volume de feu (V) et **en ce que** l'unité de traitement (5, 5') est configurée pour déterminer le flux radiatif (F) à partir d'une relation linéaire avec une caractéristique géométrique bidimensionnelle ou tridimensionnelle du feu.

10. Dispositif de caractérisation d'un incendie (1) selon la revendication 9, **caractérisé en ce que** la relation linéaire calibrée répond à l'équation :

$$F = \gamma.V$$

avec :

- F : la valeur du flux radiatif déterminée en kW/m$^2$ ;
- $\gamma$ : un coefficient de calibration ; et
- V : le volume de feu mesuré en mètres cube.

11. Dispositif de caractérisation d'un incendie (1) selon l'une quelconque des revendications précédentes, **caractérisé en ce que** les catégories prédéterminées de feu comprennent au moins une parmi les catégories suivantes : les feux de forêt, les feux de liquides, ou encore les feux industriels, lesdites catégories prédéterminées pouvant comprendre un matériau combustible particulier.

12. Dispositif de caractérisation d'un incendie (1) selon l'une quelconque des revendications précédentes, **caractérisé en ce que** l'unité de traitement (5) est configurée pour déterminer une incertitude de positionnement au sol de l'incendie (2) selon un axe transversal à l'incendie (2), ladite incertitude de positionnement au sol de l'incendie (2) étant déterminée par la relation :

$$\Delta z = \frac{z^2}{Bf} \Delta d$$

dans laquelle :

z correspond à la distance (D) réelle entre l'incendie (2) et l'au moins un système de stéréovision (3) (en mètres),
B correspond à la distance (d) entre les premier (A1) et deuxième (A2) axes optiques (en mètres) au niveau des première (31) et deuxième (33) unités de prise de vue de l'au moins un système de stéréovision (3) (en mètres),
f correspond à la distance focale des première (31) et deuxième (33) unités de prise de vue (en pixels) de l'au moins un système de stéréovision (3), et
$\Delta d$ l'incertitude de disparité des pixels (en pixels).

13. Procédé de détermination de flux radiatifs (100) dans des zones exposées à un flux radiatif (F) émis par un incendie (2), mettant en oeuvre un dispositif de caractérisation d'un incendie (1) selon l'une quelconque des revendications précédentes, ledit dispositif de caractérisation d'un incendie (1) comprenant au moins un système de stéréovision (3) présentant une première (31) et une deuxième (33) unités de prise de vue et une unité de traitement (5), et en ce qu'il comprend les étapes suivantes :

- positionnement (E1) de l'au moins un système de stéréovision (3) de manière à ce que les première (31) et deuxième (33) unités de prise de vue du système de stéréovision (3) ont une vue en au moins deux dimensions de l'incendie (2),
- entrée (E3) dans l'unité de traitement (5) de la distance (D) entre le système de stéréovision (3) et la périphérie de l'incendie (2) la plus proche du système de stéréovision (3),
- déclenchement (E5) de la prise d'images de l'incendie (2) par les première (31) et deuxième (33) unités de prise de vue de l'au moins un système de stéréovision (3),
- détermination d'au moins une caractéristique géométrique du feu (E7) par l'unité de traitement (5), l'au moins une caractéristique géométrique du feu peut être choisie parmi : la surface du front de feu, la surface de feu (S), ou le volume de feu (V),
- détermination d'un flux radiatif (E9) dans différentes zones exposées à un flux radiatif (F) émis par l'incendie (2) par l'unité de traitement (5); **caractérisé en ce que** le flux radiatif (F) est déterminé à partir d'une relation linéaire calibrée entre un flux radiatif d'un feu de référence en fonction d'au moins une caractéristique géométrique du feu et d'au moins une catégorie de feu choisie parmi plusieurs catégories prédéterminées de feu afin de pouvoir déterminer des zones exposées à un flux radiatif (F) émis par l'incendie (2) dépassant un seuil de référence, et
- représentation d'une cartographie (E11) présentant les caractéristiques géométriques du feu et les flux radiatifs (F) dans différentes zones exposées à un flux radiatif (F) émis par l'incendie (2) sur une unité d'affichage (9) en communication avec l'unité de traitement.

14. Procédé de détermination de flux radiatifs (100) selon la revendication 13,

**caractérisé en ce qu'**il comprend en outre une étape de positionnement et de localisation (E2) d'un anémomètre (7) en communication avec l'unité de traitement (5), ladite étape de positionnement et de localisation (E2) de l'anémomètre (7) étant réalisée en amont de l'étape d'entrée (E3) dans l'unité de traitement (5) de la distance (D) entre le système de stéréovision (3) et l'incendie (2) et

**en ce qu'**il comprend notamment une étape de mesure des caractéristiques du vent (E2') de manière à ce que l'unité de traitement (5) corrige la valeur du flux radiatif (F) déterminée en fonction de ces caractéristiques du vent lors de l'étape de détermination d'un flux radiatif (E9).

15. Procédé de détermination de flux radiatifs (100) selon l'une quelconque des revendications 13 à 14, **caractérisé en ce qu'**il comprend en outre une étape de superposition (E6) des images prises dans le domaine du visible et dans le domaine du proche infra-rouge, ladite étape de superposition (E6) étant réalisée entre l'étape de déclenchement (E5) de la prise d'images du feu et de détermination de l'au moins une caractéristique géométrique du feu (E7).

**Patentansprüche**

1. Vorrichtung zur Charakterisierung eines Brandes (1), welche umfasst:

   • mindestens ein Stereosichtsystem (3), das eine erste (31) und eine zweite (33) Aufnahmeeinheit aufweist, die dafür ausgelegt sind, Bilder eines Brandes (2) aufzunehmen, wobei die erste (31) und zweite (33) Aufnahmeeinheit jeweils eine optische Achse (A1, A2) aufweisen, wobei die erste (A1) und die zweite (A2) optische Achse an der ersten (31) und der zweiten (33) Aufnahmeeinheit durch einen vorbestimmten Abstand (d) voneinander getrennt sind; und
   • mindestens eine Verarbeitungseinheit (5), die dafür ausgelegt ist, die von der ersten (31) und zweiten (33) Aufnahmeeinheit des mindestens einen Stereosichtsystems (3) aufgenommenen Bilder zu kombinieren, um mindestens ein geometrisches Merkmal des Feuers zu bestimmen, wobei das mindestens eine geometrische Merkmal des Feuers ausgewählt sein kann aus:

      der Fläche der Feuerfront, der Feuerfläche (S) oder dem Feuervolumen (V); wobei die Verarbeitungseinheit (5) dafür ausgelegt ist, einen Strahlungsfluss (F) in verschiedenen Bereichen, die einem von dem Brand (2) ausgehenden Strahlungsfluss (F) ausgesetzt sind, zu bestimmen; **dadurch gekennzeichnet, dass** der Strahlungsfluss (F) anhand einer kalibrierten linearen Beziehung bestimmt wird, die zwischen einem Strahlungsfluss eines Referenzfeuers in Abhängigkeit von mindestens einem der geometrischen Merkmale des Feuers und von mindestens einer aus mehreren vorbestimmten Feuerkategorien ausgewählten Feuerkategorie besteht, um Bereiche bestimmen zu können, die einem von dem Brand (2) ausgehenden Strahlungsfluss (F) ausgesetzt sind, der einen Referenzschwellenwert überschreitet; wobei die Vorrichtung zur Charakterisierung eines Brandes (1) außerdem eine mit der Verarbeitungseinheit (5) in Verbindung stehende Anzeigeeinheit (9) umfasst, die dafür ausgelegt ist, eine Kartierung darzustellen (E11), welche die geometrischen Merkmale des Feuers und die Strahlungsflüsse (F) in verschiedenen Bereichen zeigt, die einem von dem Brand (2) ausgehenden Strahlungsfluss (F) ausgesetzt sind.

2. Vorrichtung zur Charakterisierung eines Brandes (1) nach dem vorhergehenden Anspruch, **dadurch gekennzeichnet, dass** sie außerdem ein Anemometer (7) aufweist, das dafür ausgelegt ist, Merkmale des Windes zu bestimmen, wobei das Anemometer (7) mit der Verarbeitungseinheit (5) verbunden ist, wobei die Verarbeitungseinheit (5) dafür ausgelegt ist, den Strahlungsfluss (F) des Brandes (2) in Abhängigkeit von den Merkmalen des Windes zu korrigieren.

3. Vorrichtung zur Charakterisierung eines Brandes (1) nach einem der vorhergehenden Ansprüche, **dadurch gekennzeichnet, dass** das mindestens eine Stereosichtsystem (3) außerdem ein zentimetergenau arbeitendes Lokalisierungssystem (35) aufweist, das dafür ausgelegt ist, die Position, die Neigung und die Ausrichtung der ersten (A1) und zweiten (A2) optischen Achse der ersten (31) und zweiten (33) Aufnahmeeinheit des mindestens einen Stereosichtsystems (3) an die mindestens eine Verarbeitungseinheit (5) zu übertragen.

4. Vorrichtung zur Charakterisierung eines Brandes (1) nach einem der vorhergehenden Ansprüche, **dadurch gekennzeichnet, dass** die mindestens eine Verarbeitungseinheit (5) dafür ausgelegt ist, die geometrischen Merkmale des Feuers und die Strahlungsflüsse (F) von verschiedenen Bereichen, die einem von dem Brand (2) ausgehenden Strahlungsfluss (F) ausgesetzt sind, zu kartieren, wobei die Verarbeitungseinheit (5) mit einer Anzeigeeinheit (9) in Verbindung steht, die dafür ausgelegt ist, diese Kartierung anzuzeigen.

5. Vorrichtung zur Charakterisierung eines Brandes (1) nach einem der vorhergehenden Ansprüche, **dadurch gekennzeichnet, dass** das mindestens eine Stereosichtsystem (3) ein multimodales Stereosichtsystem (3) ist, das dafür ausgelegt ist, einerseits Bilder im sichtbaren Bereich und andererseits Bilder im nahen Infrarotbereich aufzunehmen.

6. Vorrichtung zur Charakterisierung eines Brandes (1) nach einem der vorhergehenden Ansprüche, **dadurch gekennzeichnet, dass** die mindestens eine Verarbeitungseinheit (5) dafür ausgelegt ist, das mindestens eine geometrische Merkmal des Feuers in Abhängigkeit von der Zeit zu verfolgen, um so die zeitliche Entwicklung des Brandes (2) zu bestimmen, und die Strahlungsflüsse (F) der verschiedenen Bereiche, die einem von dem Brand (2) ausgehenden Strahlungsfluss ausgesetzt sind, in Abhängigkeit von dieser zeitlichen Entwicklung des Brandes zu verfolgen.

7. Vorrichtung zur Charakterisierung eines Brandes (1) nach einem der Ansprüche 1 bis 6, **dadurch gekennzeichnet, dass** sie ein einziges Stereosichtsystem (3) aufweist, und dadurch, dass die Verarbeitungseinheit (5) dafür ausgelegt ist, den Strahlungsfluss (F) anhand einer linearen Beziehung mit einem zweidimensionalen geometrischen Merkmal des Feuers zu bestimmen.

8. Vorrichtung zur Charakterisierung eines Brandes (1) nach Anspruch 7, **dadurch gekennzeichnet, dass** die kalibrierte lineare Beziehung der Gleichung genügt:

$$F = \beta.S_F$$

mit:

• F : bestimmter Wert des Strahlungsflusses in kW/m$^2$;
• $\beta$ : Kalibrierungskoeffizient; und
• $S_F$ : Fläche der Feuerfront, gemessen in Quadratmetern.

9. Vorrichtung zur Charakterisierung eines Brandes (1) nach einem der Ansprüche 1 bis 6, **dadurch gekennzeichnet, dass** sie zwei Stereosichtsystem (3, 3') aufweist, die dafür ausgelegt sind, so angeordnet zu werden, dass sie unterschiedliche Sichtwinkel des Feuers aufnehmen, um das Feuervolumen (V) zu bestimmen, und dadurch, dass die Verarbeitungseinheit (5, 5') dafür ausgelegt ist, den Strahlungsfluss (F) anhand einer linearen Beziehung mit einem zweidimensionalen oder dreidimensionalen geometrischen Merkmal des Feuers zu bestimmen.

10. Vorrichtung zur Charakterisierung eines Brandes (1) nach Anspruch 9, **dadurch gekennzeichnet, dass** die kalibrierte lineare Beziehung der Gleichung genügt:

$$F = \gamma.V$$

mit:

• F : bestimmter Wert des Strahlungsflusses in kW/m$^2$;
• $\gamma$ : Kalibrierungskoeffizient; und
• V : Feuervolumen, gemessen in Kubikmetern.

11. Vorrichtung zur Charakterisierung eines Brandes (1) nach einem der vorhergehenden Ansprüche, **dadurch gekennzeichnet, dass** die vorbestimmten Feuerkategorien mindestens eine der folgenden Kategorien umfassen: Waldbrände, Brände von Flüssigkeiten oder auch Industriebrände, wobei die vorbestimmten Kategorien ein bestimmtes brennbares Material umfassen können.

12. Vorrichtung zur Charakterisierung eines Brandes (1) nach einem der vorhergehenden Ansprüche, **dadurch gekennzeichnet, dass** die Verarbeitungseinheit (5) dafür ausgelegt ist, eine Positionierungsunsicherheit des Brandes (2) am Boden entlang einer quer zum Brand (2) verlaufenden Achse zu bestimmen, wobei diese Positionierungsunsicherheit des Brandes (2) am Boden durch die Beziehung:

$$\Delta z = \frac{z^2}{Bf}\Delta d$$

bestimmt wird, wobei:

z dem tatsächlichen Abstand (D) zwischen dem Brand (2) und dem mindestens einen Stereosichtsystem (3) (in Metern) entspricht,
B dem Abstand (d) zwischen der ersten (A1) und zweiten (A2) optischen Achse (in Metern) an der ersten (31) und zweiten (33) Aufnahmeeinheit des mindestens einen Stereosichtsystems (3) (in Metern) entspricht,
f der Brennweite der ersten (31) und zweiten (33) Aufnahmeeinheit (in Pixeln) des mindestens einen Stereosichtsystems (3) entspricht und
$\Delta d$ die Disparitätsunsicherheit der Pixel (in Pixeln) ist.

13. Verfahren zur Bestimmung von Strahlungsflüssen (100) in einem von einem Brand (2) ausgehenden Strahlungsfluss (F) ausgesetzten Bereichen, bei dem eine Vorrichtung zur Charakterisierung eines Brandes (1) nach einem der vorhergehenden Ansprüche eingesetzt wird, wobei die Vorrichtung zur Charakterisierung eines Brandes (1) mindestens ein Stereosichtsystem (3), das eine erste (31) und eine zweite (33) Aufnahmeeinheit aufweist, und eine Verarbeitungseinheit (5) umfasst, und das Verfahren die folgenden Schritte umfasst:

• Positionierung (E1) des mindestens einen Stereosichtsystems (3) derart, dass die erste (31) und zweite (33) Aufnahmeeinheit des Stereosichtsystems (3) eine Sicht auf den Brand (2) in mindestens zwei Dimensionen haben,
• Eingabe (E3) des Abstands (D) zwischen dem Stereosichtsystem (3) und dem Umfangsrand des Brandes (2), der dem Stereosichtsystem (3) am nächsten ist, in die Verarbeitungseinheit (5),
• Auslösung (E5) der Aufnahme von Bildern des Brandes (2) durch die erste (31) und zweite (33) Aufnahmeeinheit des mindestens einen Stereosichtsystems (3),
• Bestimmung mindestens eines geometrischen Merkmals des Feuers (E7) durch die Verarbeitungseinheit (5), wobei das mindestens eine geometrische Merkmal des Feuers ausgewählt sein kann aus: der Fläche der Feuerfront, der Feuerfläche (S) oder dem Feuervolumen (V),
• Bestimmung eines Strahlungsflusses (E9) in verschiedenen Bereichen, die einem von dem Brand (2) ausgehenden Strahlungsfluss (F) ausgesetzt sind, durch die Verarbeitungseinheit (5);
**dadurch gekennzeichnet, dass** der Strahlungsfluss (F) anhand einer kalibrierten linearen Beziehung zwischen einem Strahlungsfluss eines Referenzfeuers in Abhängigkeit von mindestens einem geometrischen Merkmal des Feuers und von mindestens einer aus mehreren vorbestimmten Feuerkategorien ausgewählten Feuerkategorie bestimmt wird, um Bereiche bestimmen zu können, die einem von dem Brand (2) ausgehenden Strahlungsfluss (F) ausgesetzt sind, der einen Referenzschwellenwert überschreitet, und
• Darstellung einer Kartierung (E11), welche die geometrischen Merkmale des Feuers und die Strahlungsflüsse (F) in verschiedenen Bereichen zeigt, die einem von dem Brand (2) ausgehenden Strahlungsfluss (F) ausgesetzt sind, auf einer mit der Verarbeitungseinheit in Verbindung stehenden Anzeigeeinheit (9).

14. Verfahren zur Bestimmung von Strahlungsflüssen (100) nach Anspruch 13, **dadurch gekennzeichnet, dass** es außerdem einen Schritt der Positionierung und Lokalisierung (E2) eines mit der Verarbeitungseinheit (5) in Verbindung stehenden Anemometers (7) umfasst, wobei der Schritt der Positionierung und Lokalisierung (E2) des Anemometers (7) vor dem Schritt der Eingabe (E3) des Abstands (D) zwischen dem Stereosichtsystem (3) und dem Brand (2) in die Verarbeitungseinheit (5) ausgeführt wird, und dadurch, dass es insbesondere einen Schritt der Messung der Merkmale des Windes (E2') umfasst, so dass die Verarbeitungseinheit (5) im Schritt der Bestimmung eines Strahlungsflusses (E9) den bestimmten Wert des Strahlungsflusses (F) in Abhängigkeit von diesen Merkmalen des Windes korrigiert.

15. Verfahren zur Bestimmung von Strahlungsflüssen (100) nach einem der Ansprüche 13 bis 14, **dadurch gekennzeichnet, dass** es außerdem einen Schritt der Überlagerung (E6) der im sichtbaren Bereich und im nahen Infrarotbereich aufgenommenen Bilder umfasst, wobei der Schritt der Überlagerung (E6) zwischen den Schritten der Auslösung (E5) der Aufnahme von Bildern des Feuers und der Bestimmung des mindestens einen geometrischen Merkmals des Feuers (E7) ausgeführt wird.

**Claims**

1. Device (1) for characterizing a fire, comprising:

• at least one stereovision system (3) comprising a first (31) and a second (33) image capture unit that are configured to take images of a fire (2), said first (31) and second (33) image capture units each having an optical axis (A1, A2), said first (A1) and second (A2) optical axes being separated from each other by a predetermined distance (d) at the first (31) and second (33) image capture units; and
• at least one processing unit (5) configured to combine the images taken by the first (31) and second (33) image capture units of the at least one stereovision system (3) in order to determine at least one geometric characteristic of the fire, which at least one geometric characteristic of the fire can be chosen from: the area of the fire front, the fire area (S), or the fire volume (V); the processing unit (5) is configured to determine a radiative flux (F) in different zones exposed to a radiative flux (F) emitted by the fire (2);
**characterized in that** the radiative flux (F) is determined on the basis of a calibrated linear relationship established between a radiative flux of a reference fire as a function of at least one of the geometric characteristics of the fire and of at least one fire category chosen from among a plurality of predetermined fire categories in order to be able to determine zones exposed to a radiative flux (F) emitted by the fire (2) that exceeds a reference threshold;
the device (1) for characterizing a fire further comprises a display unit (9) in communication with the processing unit (5) and configured to depict a map (E11) showing the geometric characteristics of the fire and the radiative fluxes (F) in different zones exposed to a radiative flux (F) emitted by the fire (2).

2. Device (1) for characterizing a fire according to the preceding claim, **characterized in that** it further comprises an anemometer (7) configured to determine characteristics of the wind, said anemometer (7) being connected to the processing unit (5), the processing unit (5) being configured to correct the radiative flux (F) of the fire (2) as a function of the characteristics of the wind.

3. Device (1) for characterizing a fire according to either one of the preceding claims, **characterized in that** the at least one stereovision system (3) further comprises a locating system (35) with centimetre precision, configured to transmit, to the at least one processing unit (5), the position, inclination and orientation of the first (A1) and second (A2) optical axes of the first (31) and second (33) image capture units of the at least one stereovision system (3).

4. Device (1) for characterizing a fire according to any one of the preceding claims, **characterized in that** the at least one processing unit (5) is configured to map the geometric characteristics of the fire and the radiative fluxes (F) of different zones exposed to a radiative flux (F) emitted by the fire (2), said processing unit (5) being in communication with a display unit (9) configured to display this map.

5. Device (1) for characterizing a fire according to any one of the preceding claims, **characterized in that** the at least one stereovision system (3) is a multimodal stereovision system (3) configured to take images in the visible range on the one hand and images in the near-infrared range on the other hand.

6. Device (1) for characterizing a fire according to any one of the preceding claims, **characterized in that** the at least one processing unit (5) is configured to track the at least one geometric characteristic of the fire as a function of time so as to determine the temporal evolution of the fire (2) and to track the radiative fluxes (F) of the different zones exposed to a radiative flux emitted by the fire (2) as a function of this temporal evolution of the fire.

7. Device (1) for characterizing a fire according to any one of Claims 1 to 6, **characterized in that** it comprises a single stereovision system (3), and **in that** the processing unit (5) is configured to determine the radiative flux (F) on the basis of a linear relationship with a two-dimensional geometric characteristic of the fire.

8. Device (1) for characterizing a fire according to Claim 7, **characterized in that** the calibrated linear relationship satisfies the equation:

$$F = \beta.S_F$$

with:

- F: the determined value of the radiative flux in kW/m$^2$;
- $\beta$: a calibration coefficient; and
- $S_F$: the area of the fire front measured in square metres.

9. Device (1) for characterizing a fire according to any one of Claims 1 to 6, **characterized in that** it comprises two stereovision systems (3, 3') configured to be arranged so as to take different viewing angles of the fire in order to determine the fire volume (V), and **in that** the processing unit (5, 5') is configured to determine the radiative flux (F) on the basis of a linear relationship with a two-dimensional or three-dimensional geometric characteristic of the fire.

10. Device (1) for characterizing a fire according to Claim 9, **characterized in that** the calibrated linear relationship satisfies the equation:

$$F = \gamma.V$$

with:

- F: the determined value of the radiative flux in kW/m$^2$;
- $\gamma$: a calibration coefficient; and
- V: the fire volume measured in cubic metres.

11. Device (1) for characterizing a fire according to any one of the preceding claims, **characterized in that** the predetermined fire categories comprise at least one of the following categories: forest fires, liquid fires, or industrial fires, said predetermined categories potentially comprising a particular combustible material.

12. Device (1) for characterizing a fire according to any one of the preceding claims, **characterized in that** the processing unit (5) is configured to determine an uncertainty in the position of the fire (2) on the ground along an axis transverse to the fire (2), said uncertainty in the position of the fire (2) on the ground being determined by the relationship:

$$\Delta z = \frac{z^2}{Bf} \Delta d$$

in which:

z corresponds to the real distance (D) between the fire (2) and the at least one stereovision system (3) (in metres),

B corresponds to the distance (d) between the first (A1) and second (A2) optical axes (in metres) at the first (31) and second (33) image capture units of the at least one stereovision system (3) (in metres);

f corresponds to the focal length of the first (31) and second (33) image capture units (in pixels) of the at least one stereovision system (3), and $\Delta d$ is the uncertainty in the disparity of the pixels (in pixels).

13. Method (100) for determining radiative fluxes in zones exposed to a radiative flux (F) emitted by a fire (2), using a device (1) for characterizing a fire according to any one of the preceding claims, said device (1) for characterizing a fire comprising at least one stereovision system (3) having a first (31) and a second (33) image capture unit and a processing unit (5), and said method comprises the following steps:

• positioning (E1) of the at least one stereovision system (3) so that the first (31) and second (33) image capture units of the stereovision system (3) have a view in at least two dimensions of the fire (2),
• entering (E3) into the processing unit (5) the distance (D) between the stereovision system (3) and the periphery of the fire (2) closest to the stereovision system (3),
• triggering (E5) of the taking of images of the fire (2) by the first (31) and second (33) image capture units of the at least one stereovision system (3),
• determining of at least one geometric characteristic of the fire (E7) by the processing unit (5), which at least one geometric characteristic of the fire can be chosen from: the area of the fire front, the fire area (S), or the fire volume (V),
• determining of a radiative flux (E9), in different zones exposed to a radiative flux (F) emitted by the fire (2), by the processing unit (5);
**characterized in that** the radiative flux (F) is determined on the basis of a calibrated linear relationship between a radiative flux of a reference fire as a function of at least one geometric characteristic of the fire and of at least one fire category chosen from among a plurality of predetermined fire categories in order to be able to determine zones exposed to a radiative flux (F) emitted by the fire (2) that exceeds a reference threshold, and
• depicting of a map (E11), showing the geometric characteristics of the fire and the radiative fluxes (F) in different zones exposed to a radiative flux (F) emitted by the fire (2), on a display unit (9) in communication with the processing unit.

14. Method (100) for determining radiative fluxes according to Claim 13, **characterized in that** it further comprises a step of positioning and locating (E2) of an anemometer (7) in communication with the processing unit (5), said step of positioning and locating (E2) of the anemometer (7) being carried out upstream of the step of entering (E3) into the processing unit (5) the distance (D) between the stereovision system (3) and the fire (2), and **in that** it comprises in particular a step of measuring the characteristics of the wind (E2') so that the processing unit (5) corrects the determined value of the radiative flux (F) as a function of these characteristics of the wind in the step of determining a radiative flux (E9).

15. Method (100) for determining radiative fluxes according to either one of Claims 13 to 14, **characterized in that** it further comprises a step of superimposing (E6) the images taken in the visible range and in the near-infrared range, said superimposing step (E6) being carried out between the step of triggering (E5) the taking of images of the fire and of determining the at least one geometric characteristic of the fire (E7).

Fig. 1

Fig. 2

Fig. 3

Fig. 5A

Fig. 5B

Fig. 4

Fig. 7

Fig. 6

Fig. 8A

Fig. 8B

Fig. 9A

Fig. 9B

Fig. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5218345 A, MULLER KURT A

**Littérature non-brevet citée dans la description**

- **TOM TOULOUSE.** Estimation par stéréovision multimodale de caractéristiques géométriques d'un feu de végétation en propagation. *thèse du Docteur,* 13 Novembre 2015
- **L. ROSSI.** Image processing and vision for the study and the modeling of spreading fires. *Image Processing Theory, Tools and Applications,* 2012
- **L. ROSSI.** Estimation of spreading fire geometrical characteristics using near infrared stéréovision. *Electronic Imaging 2013, San Francisco, Etats-Unis,* 2013
- **L. ROSSI.** *Utilisation de la stéréovision visible et proche infra-rouge pour la mesure de données expérimentales dans le cadre d'une recherche pluridisciplinaire sur les feux de forêt*
- **MARTINEZ-DE-DIOS.** Computer vision techniques for forest fire perception. *Image and vision computing,* 2008, vol. 26, 550-562
- **MILOVANOVIC ; PECUR.** Comparison of the measurement results of large scale façade fire tests using IR thermography and thermocouples. *Proceedings of the international conférence in Dubrovnik,* 2015
- Simplified flame models and prédiction of the thermal radiation emitted by a flame front in an outdoor fire. **J.L. ROSSI.** Combustion Science Technology. Taylor & Francis, 2010, vol. 182, 1457-1477
- **L ROSSI.** *Estimating the surface and volume of laboratory scale wildfire fuel using computer vision*
- **L ZARATE.** *Establishing safety distances for wildland fires*